# EUROPEAN PATENT SPECIFICATION

(11) **EP 3 076 611 B1**
(45) Date of publication and mention of the grant of the patent: **21.11.2018**
(21) Application number: 14865037.7
(22) Date of filing: 16.10.2014
(51) Int. Cl.: H04L 12/717, H04L 12/715, H04L 12/751, H04L 12/721

(54) **COMMUNICATION SYSTEM, COMMUNICATION METHOD, NETWORK INFORMATION COMBINATION APPARATUS, AND NETWORK INFORMATION COMBINATION PROGRAM**
KOMMUNIKATIONSSYSTEM, KOMMUNIKATIONSVERFAHREN, VORRICHTUNG ZUR KOMBINATION VON NETZWERKINFORMATIONEN UND NETZWERKINFORMATIONSKOMBINATIONSPROGRAMM
SYSTÈME ET PROCÉDÉ DE COMMUNICATION, APPAREIL ET PROGRAMME DE COMBINAISON D'INFORMATIONS DE RÉSEAU

(30) Priority: 27.11.2013 JP 2013244586
(43) Date of publication of application: 05.10.2016
(73) Proprietor: NEC Corporation, Tokyo 108-8001 (JP)
(72) Inventor: ASHIDA, Yuta, Tokyo 108-8001 (JP)
(74) Representative: Smith, Jeremy
(86) International application number: PCT/JP2014/005267
(87) International publication number: WO 2015/079616

(56) References cited:
- WO-A1-2009/118050
- JP-A- 2009 225 056
- JP-A- 2010 109 729
- Anonymous: "RFC 6805 - The Application of the Path Computation Element Architecture to the Determination of a Sequence of Domains in MPLS and GMPLS", , 30 November 2012 (2012-11-30), XP055379058, Retrieved from the Internet: URL:https://tools.ietf.org/html/rfc6805 [retrieved on 2017-06-07]
- YUTA ASHIDA ET AL.: 'A hierarchical control method with domain aggregation on OpenFlow networks' IEICE TECHNICAL REPORT, CQ, COMMUNICATION QUALITY vol. 112, no. 10, 12 April 2012, pages 35 - 40, XP008179022

## Description

### Technical Field

The present invention relates to a communication system including an apparatus for making packet communication in response to instructions from a control apparatus and a communication method as well as a network information combination apparatus used therefor and a network information combination program.

### Background Art

A technique called OpenFlow has been proposed in recent years (see NPL 1 and NPL 2). OpenFlow is a technique for performing path control, failure recovery, load dispersion, and optimization in units of flow assuming communication as an end-to-end flow.

An OpenFlow switch functioning as a transfer node includes a secure channel for communication with an OpenFlow controller, and operates according to a flow table instructed to add or rewrite from the OpenFlow controller as needed. The flow table defines therein a combination of rule (FlowKey; matching key) for verifying a packet header, action (Action) defining a processing content, and flow statistical information (Stats) for each flow.

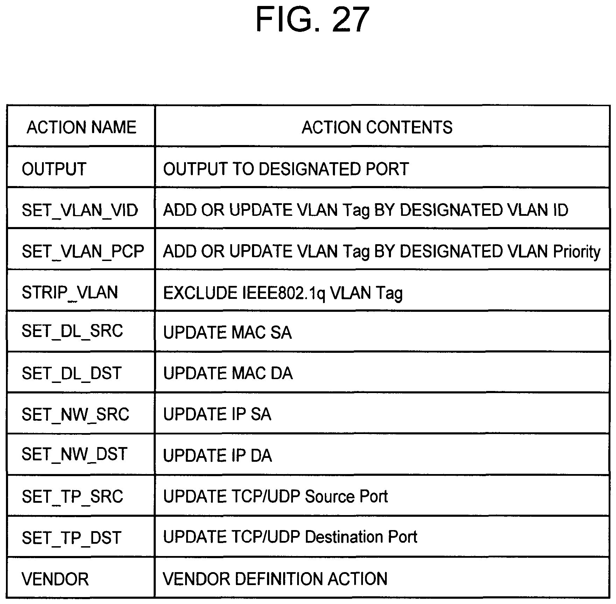

Fig. 27 illustrates action names and action contents defined in NPL 2 by way of example. OUTPUT is an action of outputting a packet to a designated port (interface). SET_VLAN_VID to SET_TP_DST are the actions of correcting the fields in a packet header.

For example, when receiving a first packet, the OpenFlow switch searches an entry having a rule (FlowKey) adapted to header information on the received packet from the flow table. If an entry adapted to the received packet is found as a result of the searching, the OpenFlow switch performs the processing contents described in the action filed of the entry on the received packet.

If an entry adapted to the received packet is not found as a result of the searching, the OpenFlow switch transfers the received packet to the OpenFlow controller via the secure channel, and asks it to determine a packet path based on the transmission source and the transmission destination of the received packet. The OpenFlow switch then receives a flow entry realizing it from the OpenFlow controller and updates the flow table.

As described above, the OpenFlow switch determines a packet processing method by the flow entry setting from the OpenFlow controller. In particular, OUTPUT of outputting a packet to a designated interface is used as the processing method in many cases, and a port designated in this case is not limited to a physical interface.

In this way, OpenFlow is such that traffic control is defined as a set of processing rules defined under matching conditions so that the OpenFlow switch is controlled by the OpenFlow controller.

PTL 1 describes therein a communication system for reducing control loads on the OpenFlow controller by making a hierarchized OpenFlow network in a network controlled by OpenFlow. The communication system described in PTL 1 assumes that one or more OpenFlow networks are present. The communication system described in PTL 1 includes a high-level OpenFlow controller (which will be denoted as high-level controller below) for further controlling each OpenFlow controller (which will be denoted as low-level controller below) for controlling a physical OpenFlow network.

Specifically, the communication system described in PTL 1 is such that each low-level controller notifies its controlling network as one virtual switch to the high-level controller and is flow-controlled by the high-level controller thereby to realize a hierarchized network. In this way, the communication system described in PTL 1 controls a plurality of OpenFlow networks as one network.

NPL 3 describes therein a method in which part of network control is intensively performed by an external apparatus in a MPLS (Multi Protocol Label Switching) network. Specifically, NPL 3 describes therein a structure in which a path for transferring a traffic is intensively computed by a PCE (Path Computation Element) in the MPLS network.

The PCE collects network topologies based on information from a MPLS router, a routing protocol such as OSPF (Open Shortest Path First), or the like to be used for path computation. The PCE computes a path between routers designated by a path computation request from the MPLS router based on a required limitation, and returns it to the MPLS router.

In this way, a path computation in the network is intensively made by use of the PCE, thereby avoiding control's consistent loss or increased path convergence time which would be a problem in distributed path control in an existing IP network.

PTL 2 describes therein a method for arranging PCEs (Path Computation Element) in a hierarchical manner and a method for controlling PCEs in order to compute an end-to-end path over a plurality of networks in the MPLS network. PTL 2 further describes a method for efficiently computing a path in a large-scale MPLS network made of a plurality of domains.

Specifically, with the method described in PTL 2, domains are defined in a hierarchical manner and a PCE (path computation element) is arranged for the domain in each hierarchy. A low-level PCE provides a high-level PCE with domain-level connection relationship information, and the high-level PCE computes a path between its controlling domains. The path computation is made per hierarchy, the high-level PCE determines an input node and an output node of the low-level domain, and the low-level domain is asked of a computation task to make path computations in parallel. In this way, PTL 2 describes a method for uniformly computing a path over a plurality of domains in a network made of a plurality of domains.

WO 2009/118050 discloses a method of constructing an end-to-end routing path across multiple packet switched domains. The method comprises generating a domains topology identifying all possible domains, the border elements of those domains and the inter-domain links. When a request is received for computation of a path from a source entity in a first domain to a destination entity in a second domain, all domains and inter-domain links that cannot or are unlikely to feature in the requested path are removed from the domains topology. Candidate intra-domain paths for each remaining domain are then computed, with each candidate intra-domain path being mapped to a logical link defined by its two ends, at least one end being a border element and the other being a border element or the source or destination entity. Attributes for each logical link are determined, together with attributes of the remaining inter-domain links. A virtual network topology is generated by combining the logical links and their associated attributes with the remaining inter-domain links and their associated attributes.

Internet Engineering Task Force, RFC 6805, ISSN: 2070-1721 - "The Application of the Path Computation Element Architecture to the Determination of a Sequence of Domains in MPLS and GMPLS", discloses computing routes for Label Switch Paths (LSPs) across multiple domains in MPLS Traffic Engineering (MPLS-TE) and GMPLS networks, using Path Computation Element (PCE) architecture. The document discloses how the PCE architecture can be extended to allow the optimum sequence of domains to be selected, and how the optimum end-to-end path may be derived through the use of a hierarchical relationship between domains.

### Citation List

### Patent Literatures

PTL 1: Japanese Patent Application National Publication (Laid-Open) No. 2013-522934
PTL 2: Japanese Patent Application National Publication (Laid-Open) No. 2011-509014 Non Patent Literatures

NPL 1: Nick Mckeown and seven others, "OpenFlow: Enabling Innovation in Campus Networks," [online], [searched on February 26, 2010], Internet <URL: http://www.openflowswitch.org/documents/openflow-wp-latest.pdf>
NPL 2: "OpenFlow Switch Specification Version 1.0.0. (Wire Protocol 0x01," [online], [searched September 17, 2013], Internet <URL: https://www.opennetworking.org/images/stories/downloads/sdn-resources/onf-specifications/openflow/openflow-spec-v1.0.0.df>
NPL 3: "RFC 4655 (A Path Computation Element (PCE)-Based Architecture)," [online], [searched on September 13, 2013], Internet <URL: http://datatracker.ietf.org/doc/rfc4655/>

### Summary of Invention

### Technical Problem

As described above, an entire network can be intensively controlled by OpenFlow or PCEs in a MPLS network. However, depending on an environment in which the network is constructed, one network needs to be constructed by configuring a plurality of domains and mutually connecting the domains.

For example, when the points of users participating in a network are geographically distributed, it is desirable that a control apparatus is arranged at each point and a range controlled by each control apparatus is assumed as one management domain in consideration of a difference in communication delay or manager among the points.

The performances of a controller for controlling a network (such as OpenFlow controller for OpenFlow or PCE for MPLS network) is finite. Therefore, a single controller cannot accommodate all the apparatuses. Further, the number of accommodatable apparatuses can be limited depending on latency of control channels between the controller and the apparatuses, or throughput performance.

Under such a situation, a plurality of domains need to be mutually connected thereby to configure a large-scale network as described above. In this case, there is required a method for consistently and uniformly controlling a single network configured of combined different management domains.

With the communication system described in PTL 1, a plurality of domains can be handled as single virtual switches, respectively, and a plurality of network domains can be under control of a high-level controller. In the communication system described in PTL 1, however, the low-level controller conceals the information inside the domains, such as topology information or traffic statistical information, and notifies it as one virtual switch to the high-level controller. Therefore, the low-level controller grasps the states inside the domains or performs path control.

Therefore, in order for the communication system described in PTL 1 to perform fine-graded network monitoring or path control over domains, control between domains and control in a domain need to be consistently combined. With the communication system described in PTL 1, the control logics of the respective controllers can be complicated, and a method for reducing development cost is desired.

With the communication system described in PTL 1, the high-level controller does not grasp a connection relationship between domains and there is not a method for providing the high-level controller with the topology information of the entire network required for computing an inter-domain transfer path. Therefore, the information integrating the topology information of each domain therein is required.

On the other hand, in the method described in PTL 2, a PCE is arranged in each MPLS domain and a high-level PCE for controlling the PCEs among the domains is arranged, thereby intensively computing a path over a plurality of MPLS domains.

In the method described in PTL 2, however, only a path is intensively computed and an inter-domain connection relationship is grasped by a distributed system with MPLS routers. Therefore, the apparatuses configuring the domains need to be of the same type, and there is a problem that the apparatuses used among different management domains need to be unified. Even when the same-type apparatuses are used, an operator has to make various settings on the apparatuses included in each domain. Further, assuming that an examination needs to be made as to whether each setting is consistent in the entire network in order to reduce operational mistakes, there is a problem that operational cost increases.

It is therefore an object of the present invention to provide a communication system capable of consistently performing traffic control in an entire network while reducing control cost when controlling a traffic of the network integrating a plurality of network domains therein and a communication method as well as a network information combination apparatus used therefor and a network information combination program.

### Solution to Problem

The present invention provides a communication system, communication method and network information combination program, as set out in the appended claims.

### Advantageous Effects of Invention

According to the present invention, it is possible to consistently perform traffic control in an entire network while reducing control cost when controlling a traffic in the network integrating a plurality of network domains therein.

### Brief Description of Drawings

[Fig. 1] It depicts a block diagram illustrating a communication system according to an exemplary embodiment of the present invention.
[Fig. 2] It depicts a block diagram illustrating an exemplary structure of a network combination apparatus 10 according to a first exemplary embodiment.
[Fig. 3] It depicts an explanatory diagram illustrating a processing flow in the exemplary structure illustrated in Fig. 1.
[Fig. 4(a)] It depicts an explanatory diagram illustrating an exemplary topology.
[Fig. 4(b)] It depicts an explanatory diagram illustrating an exemplary topology.
[Fig. 5] It depicts an explanatory diagram illustrating exemplary link information.
[Fig. 6] It depicts an explanatory diagram illustrating an exemplary inter-domain topology.
[Fig. 7] It depicts an explanatory diagram illustrating an exemplary inter-domain flow.
[Fig. 8(a)] It depicts an explanatory diagram illustrating exemplary divided flows.
[Fig. 8(b)] It depicts an explanatory diagram illustrating exemplary divided flows.
[Fig. 9] It depicts a block diagram illustrating an exemplary structure of the network combination apparatus 10 according to a second exemplary embodiment.
[Fig. 10] It depicts a block diagram illustrating an exemplary structure of a control apparatus according to the second exemplary embodiment.
[Fig. 11] It depicts an explanatory diagram illustrating an exemplary search packet.
[Fig. 12] It depicts an explanatory diagram illustrating an exemplary link search processing.
[Fig. 13] It depicts an explanatory diagram illustrating other exemplary inter-domain flows.
[Fig. 14(a)] It depicts an explanatory diagram illustrating exemplary decomposed inter-domain flows illustrated in Fig. 13.
[Fig. 14(b)] It depicts an explanatory diagram illustrating exemplary decomposed inter-domain flows illustrated in Fig. 13.
[Fig. 15(a)] It depicts an explanatory diagram illustrating exemplary flows of the changed flows illustrated in Fig. 14(a).
[Fig. 15(b)] It depicts an explanatory diagram illustrating exemplary flows of the changed flows illustrated in Fig. 14(b).
[Fig. 16] It depicts an explanatory diagram illustrating an exemplary inter-domain link search processing according to a first variant.
[Fig. 17] It depicts an explanatory diagram illustrating an exemplary inter-domain link search processing according to a second variant.
[Fig. 18] It depicts an explanatory diagram illustrating an exemplary inter-domain link search processing according to a third variant.
[Fig. 19] It depicts a block diagram illustrating an exemplary structure of a flow computation apparatus 50.
[Fig. 20] It depicts an explanatory diagram illustrating an exemplary inter-domain link search processing according to a fourth variant.
[Fig. 21] It depicts an explanatory diagram illustrating an exemplary inter-domain link search processing according to a fifth variant.
[Fig. 22] It depicts an explanatory diagram illustrating an exemplary inter-domain link search processing according to a sixth variant.
[Fig. 23] It depicts an explanatory diagram illustrating an exemplary inter-domain link search processing according to a seventh variant.
[Fig. 24] It depicts an explanatory diagram illustrating an exemplary inter-domain link search processing according to an eighth variant.
[Fig. 25] It depicts a block diagram illustrating an outline of a communication system according to the present invention.
[Fig. 26] It depicts a block diagram illustrating an outline of a network information combination apparatus according to the present invention.
[Fig. 27] It depicts an explanatory diagram illustrating action names and action contents defined in OpenFlow.

### Description of Embodiments

Exemplary embodiments of the present invention will be described below with reference to the drawings.

### First exemplary embodiment

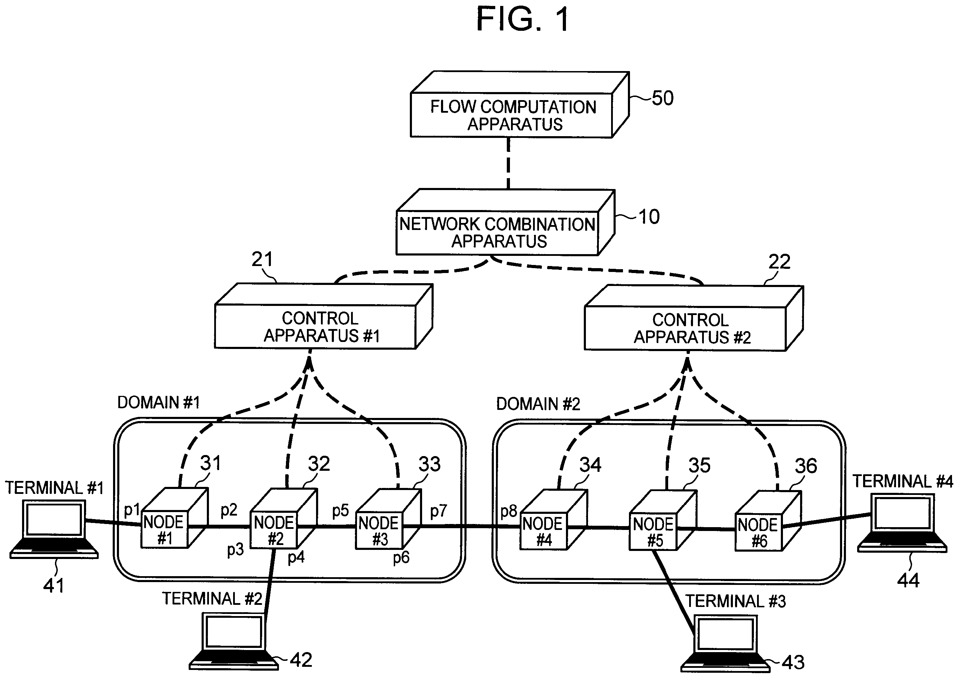

Fig. 1 is a block diagram illustrating a communication system according to an exemplary embodiment of the present invention. The communication system illustrated in Fig. 1 includes a network combination apparatus 10, control apparatuses 21 to 22, nodes 31 to 36, and a flow computation apparatus 50. The node 31, the node 32, the node 35, and the node 36 are connected with a terminal 41, a terminal 42, a terminal 43, and a terminal 44, respectively.

In the following description, the control apparatus 21 and the control apparatus 22 may be denoted as control apparatus #1 and control apparatus #2, respectively, the node 31, the node 32, the node 33, the node 34, the node 35, and the node 36 may be denoted as node #1, node #2, node #3, node #4, node #5, and node #6, respectively, and the terminal 41, the terminal 42, the terminal 43, and the terminal 44 may be denoted as terminal #1, terminal #2, terminal #3, and terminal #4, respectively.

According to the present exemplary embodiment, a domain including the control apparatus 21 and the nodes 31 to 33 is assumed as domain #1, and a domain including the control apparatus 22 and the nodes 34 to 36 is assumed as domain #2. A domain indicates an area for managing a network including a plurality of apparatuses. According to the present exemplary embodiment, an area for managing a network including a control apparatus and a plurality of nodes controlled by the control apparatus is denoted as domain.

The control apparatus 21 is connected to the nodes 31 to 33 via control communication channels, and the control apparatus 22 is connected to the nodes 34 to 36 via control communication channels. In Fig. 1, the control communication channels for connecting a control apparatus and nodes are indicated in broken lines. Each control apparatus sets a rule for processing packets for the connected nodes, thereby controlling packet transfer by each node. In the following description, a packet processing rule including packet identification information used by the nodes for transferring a packet and their operations (such as transfer path or termination processing method) will be simply denoted as flow.

The node 33 is connected to the node 34 via a link beyond the domains. Further, the node 31, the node 32, the node 35, and the node 36 are connected to the terminal 41, the terminal 42, the terminal 43, and the terminal 44, respectively.

Fig. 1 illustrates some ports among the ports provided in the respective nodes. Specifically, the node #1 is provided with a port p1 and a port p2, the node #2 is provided with a port p3, a port p4, and a port p5, the node #3 is provided with a port p6 and a port p7, and the node #4 is provided with a port p8.

The control apparatus 21 and the control apparatus 22 are connected to the network combination apparatus 10 via control communication channels, and the network combination apparatus 10 is connected to the flow computation apparatus 50 via a control communication channel. In Fig. 1, the control communication channels for connecting the control apparatuses and the network combination apparatus 10 and the control communication channel for connecting the network combination apparatus 10 and the flow computation apparatus 50 are indicated in broken lines.

The structure illustrated in Fig. 1 is exemplary, and the number of nodes and the number of control apparatuses are not limited to the numbers illustrated in Fig. 1. The number of nodes belonging to each domain may be one or two, and may be four or more. Further, the number of control apparatuses is not limited to two and may be three or more. Furthermore, the number of domains is not limited to two and may be three or more.

The operation outline of the present exemplary embodiment will be described below. The control apparatus 21 collects and stores the connection relationship among the node 31, the node 32, and the node 33 in its controlling domain #1 as topology information. Topology information may be simply denoted as topology below. Further, the control apparatus 22 collects and stores the connection relationship among the node 34, the node 35, and the node 36 in its controlling domain #2 as topology information.

When the topologies in the domain #1 and the domain #2 are changed, the control apparatus 21 and the control apparatus 22 notify the topologies to the network combination apparatus 10. The network combination apparatus 10 combines the notified topology information of the domain #1 and the domain #2 in a link for connecting the domains, and notifies the combined information as one network topology to the flow computation apparatus 50.

In the example illustrated in Fig. 1, the network combination apparatus 10 combines and notifies the topology of the domain #1 and the topology of the domain #2 in a link for connecting the node #3 and the node #4 to the flow computation apparatus 50. With the operation, the topology over the domains is provided to the flow computation apparatus 50.

When a node detects a new traffic, the control apparatus 21 and the control apparatus 22 are requested to set a flow by the node. The control apparatus 21 and the control apparatus 22 notify the flow setting request to the network combination apparatus 10, and the network combination apparatus 10 further notifies the flow setting request to the flow computation apparatus 50.

In order to perform flow control in response to the flow setting request or depending on a situation change such as topology variation, user instruction or new host registration, the flow computation apparatus 50 computes an identification condition of packets classified to the flow, and a path used for packet transfer. Specifically, the flow computation apparatus 50 computes a packet processing rule (flow) over the domains (the domain #1 and the domain #2). A flow over domains will be denoted as inter-domain flow below.

The flow computation apparatus 50 creates a set of packet processing rules to be set for the nodes 31 to 36 based on the identification condition and the path used for packet transfer, and notifies the set as a flow setting instruction to the network combination apparatus 10.

When receiving the flow setting instruction, in order to decompose the flow setting instruction at the boundary between the domain #1 and the domain #2, the network combination apparatus 10 converts it into the packet processing rule to be set for the nodes 31 to 33 and the packet processing rule to be set for the nodes 34 to 36.

Further, the network combination apparatus 10 notifies the converted packet processing rules for the nodes 31 to 33 as a flow setting instruction for the domain #1 to the control apparatus 21. Similarly, the network combination apparatus 10 notifies the converted packet processing rules for the nodes 34 to 36 as a flow setting instruction for the domain #2 to the control apparatus 22.

The control apparatus 21 and the control apparatus 22, which receive the flow setting instructions, set the packet processing rules in the flow setting instructions for the nodes to be controlled, respectively. With the operation, the inter-domain flow setting computed by the flow computation apparatus 50 is set for a physical network, which enables packet transfer.

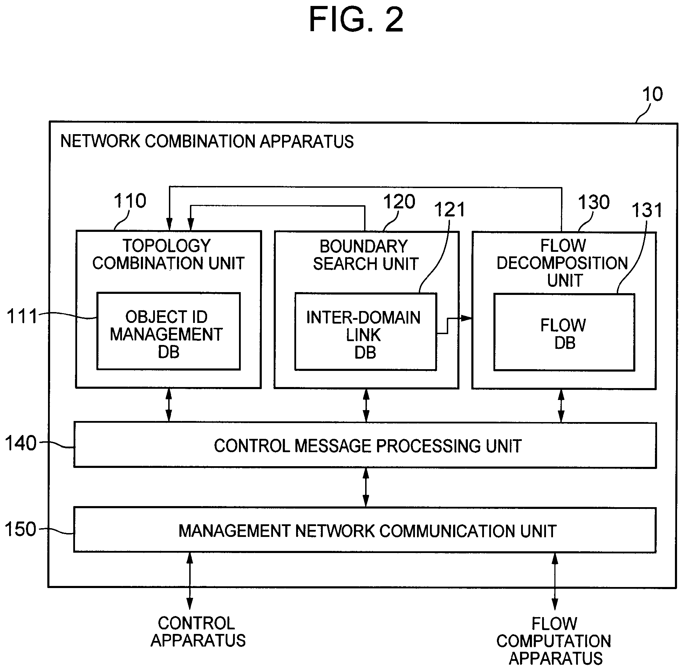

The operations of the network combination apparatus 10 according to the present exemplary embodiment will be described below. Fig. 2 is a block diagram illustrating an exemplary structure of the network combination apparatus 10 according to the first exemplary embodiment. The network combination apparatus 10 according to the present exemplary embodiment includes a topology combination unit 110, a boundary search unit 120, a flow decomposition unit 130, a control message processing unit 140, and a management network communication unit 150.

The topology combination unit 110, the boundary search unit 120, and the flow decomposition unit 130 are realized by the CPU in a computer operating according to a program (network information combination program). For example, the program is stored in a storage unit (not illustrated) in the network combination apparatus 10, and the CPU may read the program and operate as the topology combination unit 110, the boundary search unit 120, and the flow decomposition unit 130 according to the program. Further, the topology combination unit 110, the boundary search unit 120, and the flow decomposition unit 130 may be realized in dedicated hardware, respectively.

The management network communication unit 150 makes communication with the control apparatuses 21, 22 and the flow computation apparatus 50.

The control message processing unit 140 passes messages from the control apparatuses and messages to the control apparatuses to an appropriate control function.

The topology combination unit 110 combines topologies of a plurality of domains. Specifically, the topology combination unit 110 combines the topologies of the domains received from the control apparatuses 21 and 22, and generates a topology of a network over the domains (which will be denoted as inter-domain topology).

The topology combination unit 110 has an object ID management database 111 (which will be denoted as object ID management DB 111 below). The object ID management DB 111 holds a correspondence of the identification information of the objects configuring the topology information between the topology information received by the control apparatus in each domain (which may be denoted as local topology information) and the topology information notified to the flow computation apparatus 50 for controlling the entire network (which may be denoted as global topology information).

The present exemplary embodiment will be described assuming that the topology combination unit 110 has the object ID management DB 111. When a topology object ID is unique in the entire network and an object ID determined by the control apparatus in each domain is not changed to be used by a high-level control apparatus, the topology combination unit 110 may not include the object ID management DB 111. Further, the topology combination unit 110 may store the uncombined topology information of each domain and the combined topology information in a cache (not illustrated).

The boundary search unit 120 searches a link physically combining the domains.

Further, the boundary search unit 120 has an inter-domain link database 121 (which will be denoted as inter-domain link DB 121 below). The inter-domain link DB 121 holds the information on the inter-domain links.

The flow decomposition unit 130 decomposes the inter-domain flow transmitted from the flow computation apparatus 50 into the domain-based flows. That is, the flow decomposition unit 130 converts the inter-domain flow computed by the flow computation apparatus 50 into the flows to be set for the communication nodes controlled by each control apparatus.

Further, the flow decomposition unit 130 has a flow database 131 (which will be denoted as flow DB 131 below). The flow DB 131 holds the undecomposed flow information and the decomposed flow information as well as a correspondence therebetween.

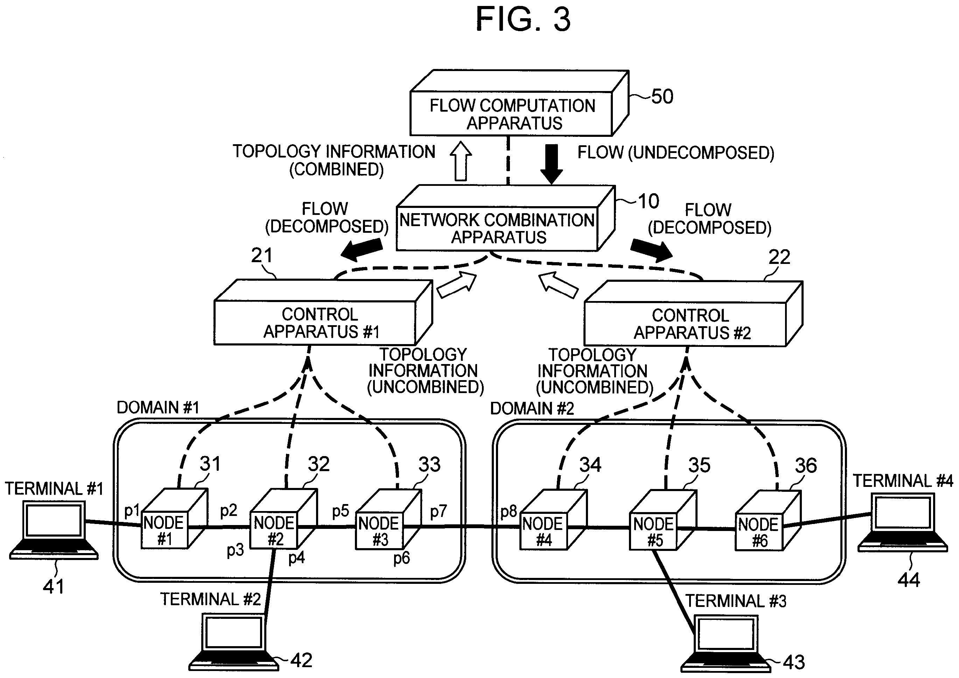

Fig. 3 is an explanatory diagram illustrating a network topology combination processing flow and an inter-domain flow decomposition processing flow in the exemplary structure illustrated in Fig. 1. The processing of combining topologies in the respective domains will be first described.

The topology combination processing is performed in the flow of white arrows illustrated in Fig. 3. Specifically, the control apparatus 21 and the control apparatus 22 transmit the topology information of the domains to the network combination apparatus 10, respectively, and the network combination apparatus 10 transmits topology information combining the topology information of the domains therein to the flow computation apparatus 50.

The control apparatus 21 and the control apparatus 22 control the nodes connected thereto via the control channels (or the nodes 31 to 33 for the control apparatus 21 and the nodes 34 to 36 for the control apparatus 22), and monitor the inter-node topologies.

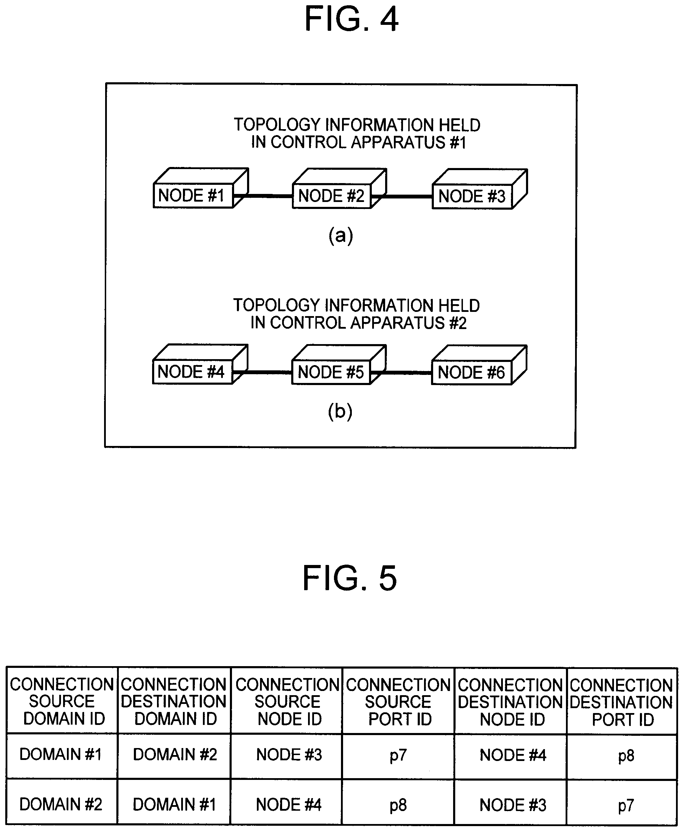

Figs. 4(a) and 4(b) are the explanatory diagrams illustrating exemplary topologies, respectively. In the exemplary structure illustrated in Fig. 1, the control apparatus 21 grasps the topology illustrated in Fig. 4(a), and the control apparatus 22 grasps the topology illustrated in Fig. 4(b).

When the topologies of the domains controlled by the control apparatus 21 and the control apparatus 22 are changed, the control apparatus 21 and the control apparatus 22 notify the topologies to the network combination apparatus 10. The network combination apparatus 10 (specifically, the topology combination unit 110) performs the processing of combining the topologies of the domains in response to the notification or a change in the inter-domain link DB.

The inter-domain link DB 121 included in the network combination apparatus 10 holds the information on a link physically connecting the domains. The link information indicates a connection relationship at a boundary between the domains, and thus may be referred to as boundary link information. The inter-domain link DB 121 may hold the link information dynamically set by the operator via the management network communication unit 150, or may read and hold the link information stored in a setting file when the network combination apparatus 10 is started up or the program is started up.

Further, the network combination apparatus 10 (the topology combination unit 110, for example) may monitor packets flowing into each port, and exclude the ports connected to the terminals from the link information.

Fig. 5 is an explanatory diagram illustrating the link information held in the inter-domain link DB 121 by way of example. The example illustrated in Fig. 5 indicates that the domain #1 is connected to the domain #2 via a link connecting the port 7 (p7) of the node #3 and the port 8 (p8) of the node #4.

The network combination apparatus 10 (more specifically, the boundary search unit 120) searches and acquires a link connecting the domain #1 and the domain #2 from the inter-domain link DB 121, and uses it as a topology combination point.

Specifically, the boundary search unit 120 searches the connection source port and the connection destination port of the inter-domain link from the topologies of the respective domains. The topology combination unit 110 then adds the inter-domain link to both the topology information to be combined into one item of topology data, thereby creating an inter-domain topology.

The network combination apparatus 10 (more specifically, the topology combination unit 110) notifies the inter-domain topology created in the processing to the flow computation apparatus 50 thereby to enable the flow computation apparatus 50 to compute a transfer path over the domains.

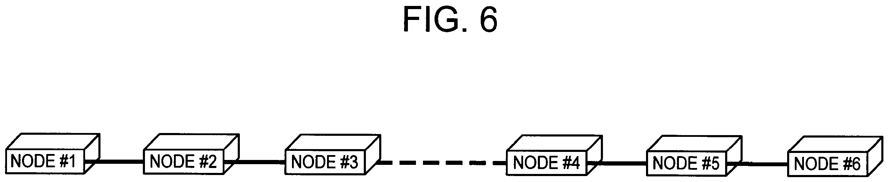

Fig. 6 is an explanatory diagram illustrating an exemplary inter-domain topology. In the exemplary structure illustrated in Fig. 1, the topology combination unit 110 generates an inter-domain topology including the information on the link indicated in a broken line illustrated in Fig. 6.

When the inter-domain link information is not present, the topology combination unit 110 may notify the topology information of each domain to the flow computation apparatus 50 without adding the inter-domain link information.

The flow decomposition processing will be described below. The flow decomposition processing is performed in the flow of black arrows illustrated in Fig. 3. Specifically, the flow computation apparatus 50 transmits a flow to be set to the network combination apparatus 10, and the network combination apparatus 10 decomposes and transmits the flow to the control apparatus 21 and the control apparatus 22. The control apparatus 21 and the control apparatus 22 set the received contents for each node to be controlled. The processing in each apparatus will be described below.

At first, a flow setting instruction is made by the flow computation apparatus 50. The flow computation apparatus 50 may passively make the flow setting instruction with a flow setting request from a node as a trigger, and may make the flow setting instruction depending on a change in the topology information or a traffic state, or in response to an instruction from an external system or an operator.

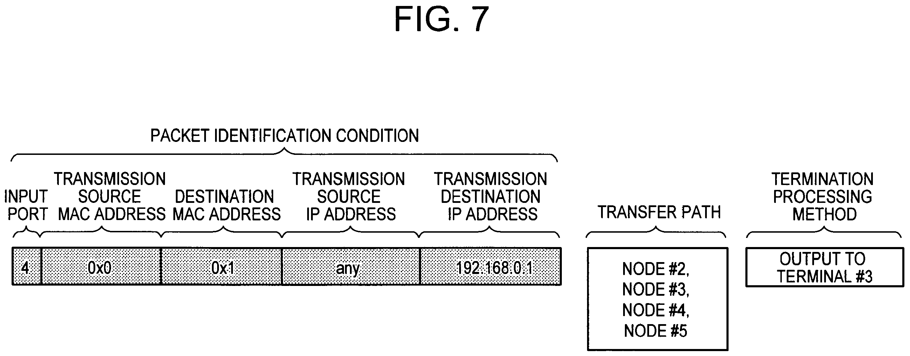

It is assumed herein that a flow for transferring a packet from the terminal 42 to the terminal 43 is set for the nodes in the exemplary structure illustrated in Fig. 1. Fig. 7 is an explanatory diagram illustrating an exemplary inter-domain flow created by the flow computation apparatus 50.

The packet identification condition illustrated in Fig. 7 is used for identifying a traffic to be processed according to the flow. In the example illustrated in Fig. 7, the port 4 (p4) of the node #2 connected to the terminal 42 is designated as input port, the MAC address of the terminal 42 is designated at 0x0, and the MAC address of the terminal 43 is designated at 0x1. Further, in the example illustrated in Fig. 7, the transmission source IP address is designated at an arbitrary value, and the IP address of the destination terminal 43 is designated at 192.168.0.1.

The transfer path illustrated in Fig. 7 indicates a path in which a packet is to be transferred, and it is designated herein that a packet is to be transferred via the node 32, the node 33, the node 34, and the node 35 in this order. The termination processing method illustrated in Fig. 7 indicates the packet processing contents to be performed at an end, and it is designated herein that a packet is to be output to the terminal 43.

The termination processing method is not limited to the contents illustrated in Fig. 7. In the termination processing method, any node-related processing can be designated, such as changing a packet header, copying a packet, or discarding a packet.

In the example illustrated in Fig. 7, a flow is expressed in a combination of packet identification condition, transfer path, and termination processing rule. Additionally, a flow may be expressed in a combination of packet identification condition and packet processing in each node according to the expression of a flow entry in OpenFlow. In this case, the flow illustrated in Fig. 7 is expressed as the respective flow entries of the node 32, the node 33, the node 34, and the node 35 included in the transfer path. The input port in the packet identification condition is changed to the port connected to a previous node in the transfer path, and the output to the port connected to a next node in the transfer path is designated in the packet processing.

When the flow setting instruction is notified from the flow computation apparatus 50 to the network combination apparatus 10, the network combination apparatus 10 (more specifically, the flow decomposition unit 130) decompose the received flow into domain-based flows by use of the inter-domain link information held in the inter-domain link DB 121.

In the exemplary structure illustrated in Fig. 1, the flow decomposition unit 130 searches a link between the domain #1 and the main #2 from the inter-domain link DB 121, and acquires a link between the node 33 and the node 34. The flow decomposition unit 130 divides the transfer path included in the flow setting instruction into two paths based on the inter-domain link information.

Specifically, in the exemplary structure illustrated in Fig. 1, the flow decomposition unit 130 creates a path from the node #2 to the node #3 and a path from the node #4 to the node #5. The paths are added with the packet identification condition and the termination processing method, respectively, thereby to perform the processing of decomposing into two flows.

The packet identification condition in the undecomposed flow may be used for the packet identification condition of the flow in the domain #1 as it is. However, in the termination processing method, the terminal 43 is not connected to the domain #1 and a processing of passing a traffic to the domain #2 needs to be designated. Thus, the flow decomposition unit 130 instructs the terminal processing method to output to the node #4 in this example.

On the other hand, the packet identification condition in the undecomposed flow can be almost used for the packet identification condition of the flow in the domain #2, but only the input port needs to be changed. The input port in the domain #2 is the port 8 (p8) as a combination point between the domain #1 and the domain #2. Therefore, the flow decomposition unit 130 designates the input port at the port 8 (p8). The termination processing method designated in the undecomposed flow is used for the termination processing method.

When an ID is changed between the combined topology and the uncombined topology, the flow decomposition unit 130 inquires the topology combination unit 110 thereby to acquire the ID of the uncombined topology held in the object ID management DB 111. The flow decomposition unit 130 then changes the node IDs or the port IDs designated for the packet identification condition, the transfer path, or the termination processing method.

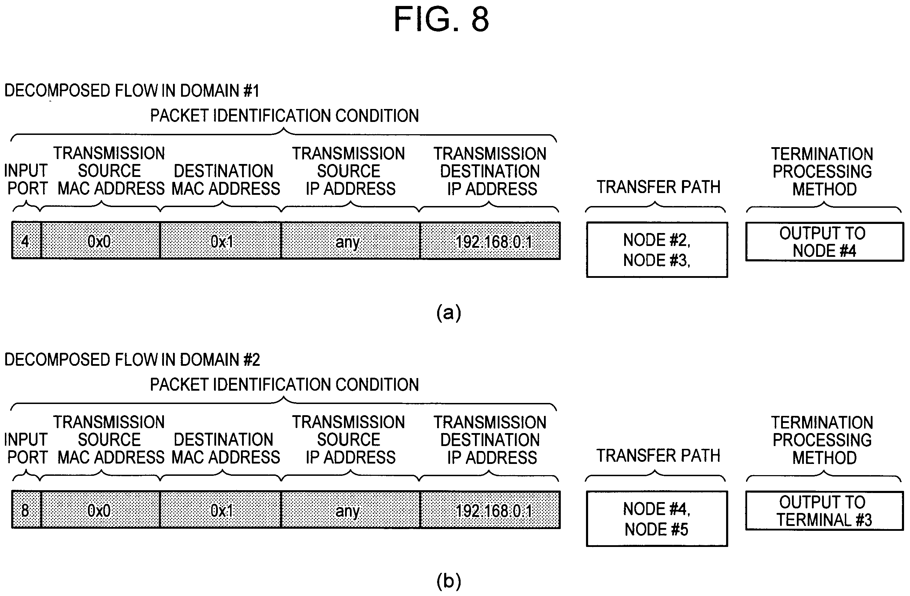

The inter-domain flow is divided into two flows to be set for the domain #1 and the domain #2 through the processing. Figs. 8(a) and 8(b) are the explanatory diagrams illustrating that an inter-domain flow is decomposed. As compared with the inter-domain flow illustrated in Fig. 7, the flow set for the domain #1 (decomposed flow: see Fig. 8(a)) is different from the inter-domain flow in terms of the transfer path and the termination processing method. Further, the flow set for the domain #2 (decomposed flow: see Fig. 8(b)) is different from the inter-domain flow in terms of the input port in the packet identification condition and the transfer path.

The network combination apparatus 10 transmits an instruction of setting a decomposed flow to the control apparatuses, and each control apparatus sets a flow for the nodes so that the flow setting is completed.

In this way, the flow decomposition unit 130 sets the same contents as the packet identification condition of the inter-domain flow for the packet identification condition among the flows to be set for the nodes in the packet transfer source domain (the domain #1 herein), and sets, for the processing contents, the contents changed to a transfer path via only the nodes in the domain and a processing of transferring from the boundary of a domain to a node in the other domain. Further, the flow decomposition unit 130 sets the same contents as the packet identification condition of the inter-domain flow other than the contents of the input source for the packet identification condition among the flows to be set for the nodes in the packet transfer destination domain (the domain #2 herein), and sets a transfer path via only the nodes in the domain for the processing contents.

As described above, according to the present exemplary embodiment, the flow decomposition unit 130 converts the inter-domain flow computed by the flow computation apparatus 50 into the flows to be set for the nodes controlled by each control apparatus, and each control apparatus sets the converted flow for the nodes to be controlled. Therefore, when a traffic of the network integrating a plurality of network domains therein is controlled, it is possible to consistently control the traffic while reducing cost required for the control. That is, even the network over a plurality of domains can be uniformly controlled.

According to the present exemplary embodiment, the topology combination unit 110 acquires the topology information of the domains controlled by the control apparatuses, and combines a plurality of items of topology information acquired from the control apparatuses based on the inter-domain link information. The topology combination unit 110 then transmits the combined topology information to the flow computation apparatus 50. Therefore, when a traffic of the network integrating a plurality of network domains therein is controlled, it is possible to consistently control the traffic in the entire network while reducing cost required for the control.

### Second exemplary embodiment

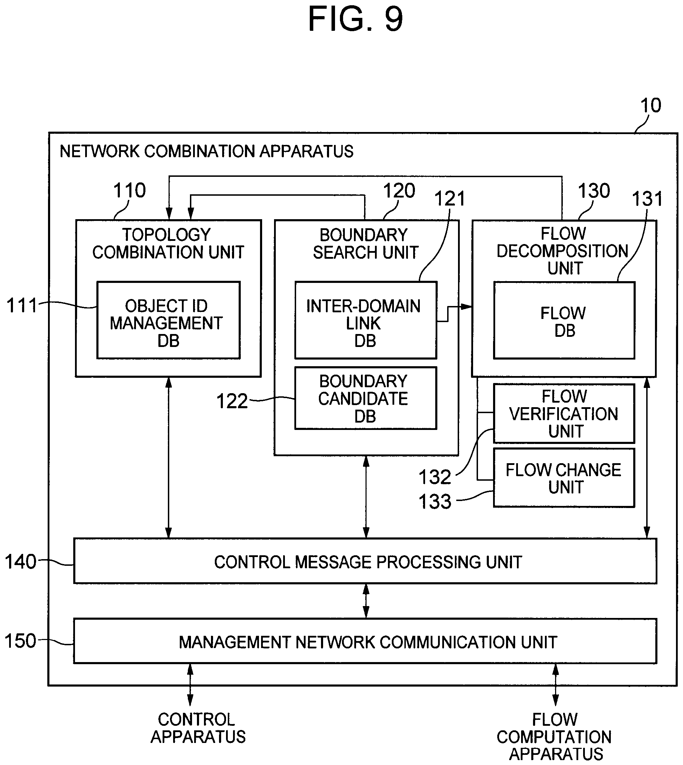

A second exemplary embodiment of the present invention will be described below. The structure of the communication system according to the present exemplary embodiment is similar to the structure illustrated in Fig. 1. Fig. 9 is a block diagram illustrating an exemplary structure of the network combination apparatus 10 according to the second exemplary embodiment. The same components as in the first exemplary embodiment are denoted with the same reference numerals as in Fig. 1, and the description thereof will be omitted as needed.

The network combination apparatus 10 according to the present exemplary embodiment includes the topology combination unit 110, the boundary search unit 120, the flow decomposition unit 130, the control message processing unit 140, and the management network communication unit 150 like the network combination apparatus 10 according to the first exemplary embodiment. The topology combination unit 110 has the object ID management DB 111 as in the first exemplary embodiment.

The boundary search unit 120 according to the present exemplary embodiment has the inter-domain link DB 121 and a boundary candidate database 122 (which will be denoted as boundary candidate DB 122 below). The boundary candidate DB 122 holds a list of ports as candidates for searching an inter-domain link.

The flow decomposition unit 130 has the flow DB 131. The network combination apparatus 10 further includes a flow verification unit 132 and a flow change unit 133 in cooperation with the flow decomposition unit 130.

The flow verification unit 132 and the flow change unit 133 are realized by the CPU in the computer operating according to the program (the network information combination program). The flow verification unit 132 and the flow change unit 133 may be realized in dedicated hardware, respectively.

The flow verification unit 132 determines whether the decomposed flow competes with the flow set for each domain. A competing flow indicates that the packet processing contents are different between the flows having the matched packet identification condition.

The flow change unit 133 changes the contents of a flow for which the flow verification unit 132 determines that the identification condition is competing. The processing of the flow change unit 133 will be described below.

Also according to the present exemplary embodiment, when a topology object ID is unique in the entire network and an object ID determined by the control apparatus in each domain is not changed to be used by the high-level control apparatus, the topology combination unit 110 may not include the object ID management DB 111. The topology combination unit 110 may store the uncombined topology information of each domain and the combined topology information in the cache (not illustrated).

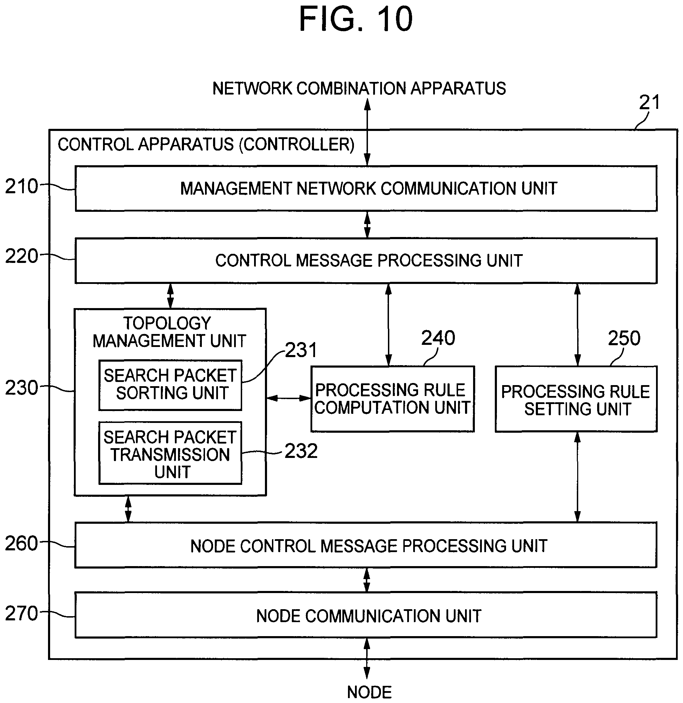

Fig. 10 is a block diagram illustrating an exemplary structure of the control apparatus according to the second exemplary embodiment. The control apparatuses according to the first exemplary embodiment may have the same structure as the control apparatuses according to the second exemplary embodiment.

The control apparatus 21 includes a management network communication unit 210, a control message processing unit 220, a topology management unit 230, a processing rule computation unit 240, a processing rule setting unit 250, a node control message processing unit 260, and a node communication unit 270. The structure of the control apparatus 21 will be described, and the control apparatus 22 also has the same structure.

The management network communication unit 210 makes communication with the network combination apparatus 10.

The control message processing unit 220 passes messages from the network combination apparatus 10 (messages to the control apparatuses) to an appropriate control function.

The node communication unit 270 makes communication with the nodes.

The node control message processing unit 260 passes messages from the nodes to an appropriate function.

The processing rule computation unit 240 converts a flow setting instruction made by the network combination apparatus 10 into a processing rule to be set for each node. The processing rule computation unit 240 may convert the flow setting instruction into the processing rule in a generally-known method depending on a form to which a node to be controlled corresponds.

The processing rule setting unit 250 instructs the nodes to set the processing rule computed by the processing rule computation unit 240.

The topology management unit 230 grasps and manages the topology of its domain. The topology management unit 230 has a search packet sorting unit 231 and a search packet transmission unit 232.

The search packet sorting unit 231 performs a processing of determining whether a received packet is a search packet, and sorting the received packet.

The search packet transmission unit 232 transmits a search pocket to the nodes in the domain. The search packet transmission unit 232 transmits an inter-domain link search packet received via the nodes to the network combination apparatus 10.

The topology combination processing according to the present exemplary embodiment will be described below. According to the present exemplary embodiment, the network combination apparatus 10 (specifically, the boundary search unit 120) periodically searches an inter-domain link, and stores the inter-domain link information in the inter-domain link DB 121. The boundary search unit 120 then acquires a list of ports as candidates for searching an inter-domain link from the boundary candidate DB 122.

The boundary candidate DB 122 may hold the ports as search candidates by the operator setting, for example. Further, the boundary candidate DB 122 may hold the search candidate ports, which are read from the setting file, when the network combination apparatus 10 or the program is started up.

Additionally, the boundary search unit 120 may store all the ports, which do not have an inter-node (such as switch) link and are logically or physically connected (or linked up) to any apparatus, as the boundary candidate ports in the boundary candidate DB 122 based on the topology information acquired from the control apparatus in each domain. Further, the boundary search unit 120 may narrow the boundary candidates by monitoring the input packets to all the ports without any inter-switch link.

Specifically, the boundary search unit 120 transmits an inter-domain link search packet from a boundary candidate port thereby to find an inter-domain link and confirm its conduction. LLDP (Link Layer Discovery Protocol) or the like is used for searching an inter-domain link, for example.

The network combination apparatus 10 (specifically, the boundary search unit 120) includes the node ID provided with a boundary candidate port for sending a packet, the ID of the port, and the ID of a domain to which the port belongs in the search packet. The boundary search unit 120 then instructs the control apparatus in each domain to send the search packet from the boundary candidate port.

For example, in the exemplary structure illustrated in Fig. 1, it is assumed that a one-way link from the domain #1 to the domain #2 is to be searched. In this case, the network combination apparatus 10 (specifically, the boundary search unit 120) instructs the control apparatus 21 to send a search packet embedding therein the information of "domain ID = domain #1, node ID = node #3, port ID = port p7" from the port 7 (p7).

The search packet may employ the same protocol as the search packet used for searching the topology of the domain by the control apparatus #1 or the control apparatus #2. The control apparatus in each domain needs to discriminate an in-domain search packet from an inter-domain link search packet.

According to the present exemplary embodiment, the control apparatus uses the domain ID included in the search packet for discrimination. Specifically, when the domain ID is included in the packet, the control apparatus determines that the packet is an inter-domain link search packet.

Specifically, when receiving a packet from the network combination apparatus 10, the control apparatus notifies the packet received by the management network communication unit 210 to the control message processing unit 220. The control message processing unit 220 notifies the notified packet to the topology management unit 230.

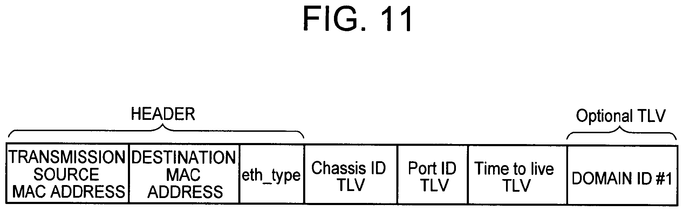

The search packet sorting unit 231 in the topology management unit 230 performs a processing of determining whether the received packet is a search packet. Fig. 11 is an explanatory diagram illustrating an exemplary search packet. Fig. 11 illustrates an example in which the domain ID is included in part of a packet (Optional TLV (Type Length Value)).

The search packet sorting unit 231 may determine that a packet including a domain ID is a search packet, for example. If the search packet sorting unit 231 can determine a search packet, a domain ID may not be included in a search packet.

The search packet transmission unit 232 notifies the packet determined as a search packet to the node control message processing unit 260. When the node control message processing unit 260 notifies the notified search packet to the node communication unit 270, the node communication unit 270 transmits the notified search packet to a node of interest.

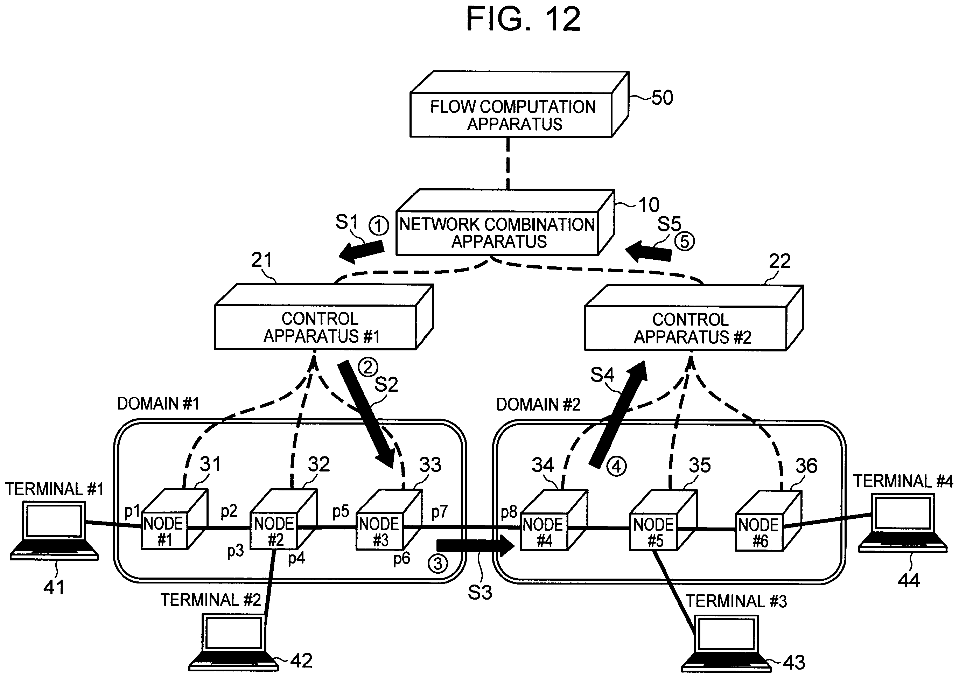

Fig. 12 is an explanatory diagram illustrating an exemplary link search processing. A search packet sent from the port p7 by the control apparatus 21 arrives at the node 34 in the opposite domain #2. The node 34 transmits the search packet and the port ID (the port p8 herein) receiving the same, as unknown packet, to the control apparatus 22 via the control channel.

Specifically, the processing is performed in the flow of black arrows illustrated in Fig. 12. The numbers in circles in Fig. 12 indicate the order of the processing. At first, the network combination apparatus 10 transmits a search packet to the control apparatus #1 (step S1). The control apparatus #1 (specifically, the search packet transmission unit 232) instructs the node #3 to send the search packet from the port p7 (step S2). The node #3 transmits the search packet from the port p7 (step S3). The node #4 notifies the reception of the search packet to the control apparatus #2 (step S4). The control apparatus #2 (specifically, the search packet transmission unit 232) notifies the reception of the search packet to the network combination apparatus 10 (step S5).

That is, since the domain ID is included in the received packet, the control apparatus 22 (specifically, the search packet sorting unit 231) receiving the search packet determines that the received packet is an inter-domain link search packet. The control apparatus 22 (specifically, the search packet transmission unit 232) then transmits the search packet together with the packet reception information including the node ID receiving the packet, the port ID, and the domain ID to the network combination apparatus 10. In the exemplary structure illustrated in Fig. 1, the packet reception information includes the node #4, the port p8, and the domain #2.

When the network combination apparatus 10 receives the search packet, the boundary search unit 120 verifies the search packet and the packet reception information thereby to determine an inter-domain link. Specifically, the boundary search unit 120 asks the topology combination unit 110 about the node ID, the port ID, and the domain ID included in the packet reception information, and acquires the node ID and the port ID in the combined topology information from the object ID management DB 111. The boundary search unit 120 then updates each ID in the packet reception information based on the acquired information.

When the IDs included in the combined topology are not created on the asking, the boundary search unit 120 may create the IDs herein. In the exemplary structure illustrated in Fig. 1, the same IDs are used between the combined topology and the uncombined topology, and thus the IDs are not changed.

The boundary search unit 120 then acquires the domain ID, the node ID, and the port ID included in the search packet, and uses them as packet transmission source information. The boundary search unit 120 creates inter-domain link information in which the packet transmission source information is assumed as the connection source of the inter-domain link and the packet reception information with the object IDs converted is assumed as the connection destination of the inter-domain link. The boundary search unit 120 adds the created link information to the inter-domain link DB 121.

In the exemplary structure illustrated in Fig. 1, the link information is connection source node ID = #3, port ID = p7, connection destination node ID = #4, and port ID = p8.

In this way, the network combination apparatus 10 (more specifically, the boundary search unit 120) periodically performs the processing on all the ports held in the boundary candidate DB 122 thereby to detect an inter-domain link.

The contents of the topology combination processing are the same as those in the first exemplary embodiment.

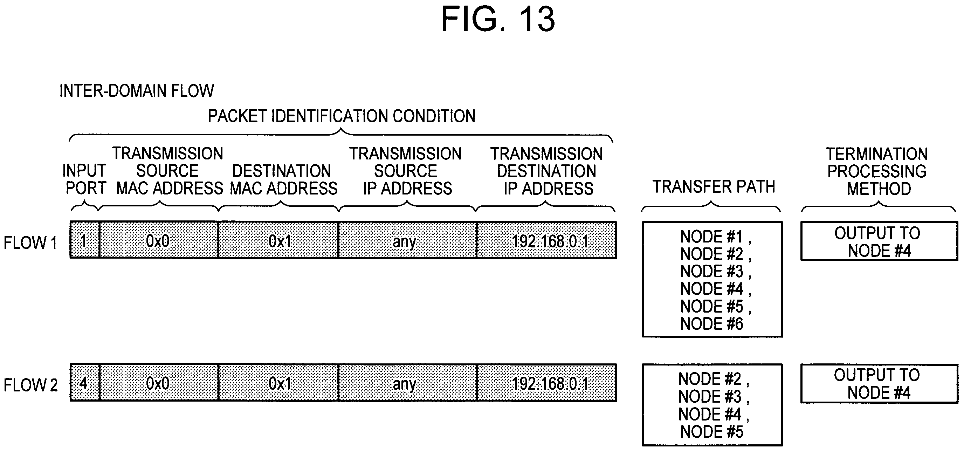

The flow setting processing according to the present exemplary embodiment will be described below. Fig. 13 is an explanatory diagram illustrating other exemplary inter-domain flows. The description of the flow setting processing assumes that the flow computation apparatus 50 computes two flows illustrated in Fig. 13. It is assumed that after the flow 1 is set for the nodes, the flow 2 is instructed to set.

The packet identification conditions of the two flows illustrated in Fig. 13 are the same except the contents of the input port. The input port information is changed depending on a different node. For example, when the two flows are set for the node 34, if the flows divided by the network combination apparatus 10 are used as they are, the port p8 enters the input port for both flows. That is, the two flows with the same packet identification condition are mixed into the physical network.

Typically, when the flows are mixed in the domain as described above, the control apparatus in each domain can avoid the mixture when converting the flows into the flow entries set for each node. For example, when the flows are mixed when a packet is transferred in a domain, there is considered a method for temporarily rewriting the header of the packet in a previous node. In the above example, however, the node 34 is at the boundary between the domains, and thus the method cannot be used only for the control apparatus in the domain, which causes the mixture of the flows.

Thus, in order to avoid mixture of flows at the boundary between the domains, when decomposing a flow, the network combination apparatus 10 according to the present exemplary embodiment determines whether the flow mixes with the set flow, and if the mixture is caused, performs a flow change processing.

Specifically, when the flow computation apparatus 50 makes a flow setting instruction to the network combination apparatus 10, as in the first exemplary embodiment, the flow decomposition unit 130 in the network combination apparatus 10 decomposes an inter-domain flow.

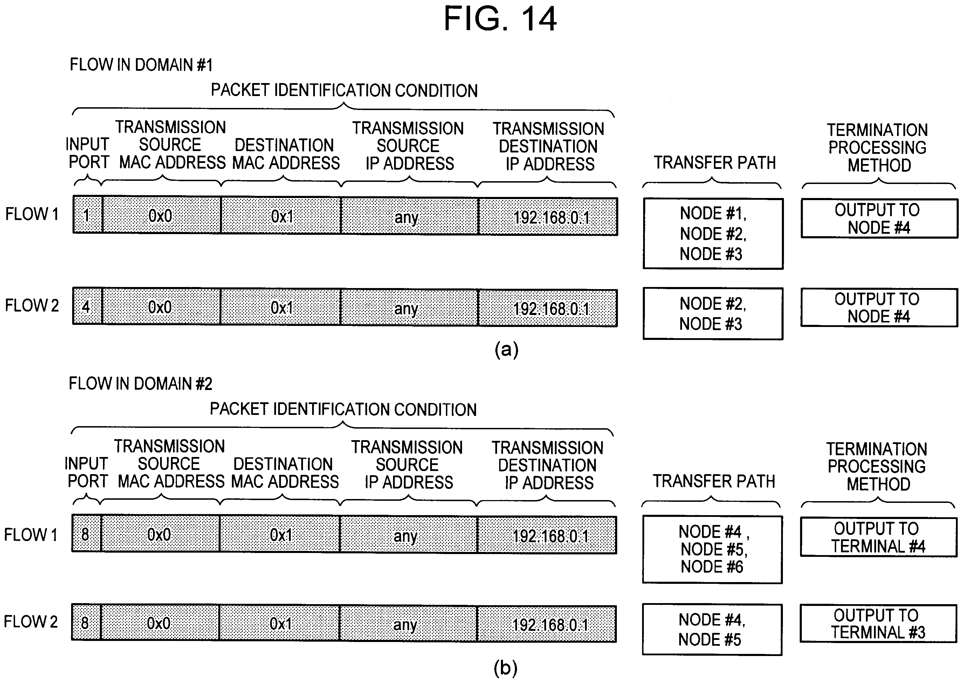

Figs. 14(a) and 14(b) are the explanatory diagrams illustrating the examples in which the inter-domain flows illustrated in 13 are decomposed. In the exemplary structure illustrated in Fig. 1, the flow decomposition unit 130 decomposes the inter-domain flow into the flow in the domain #1 (see Fig. 14(a)) and the flow in the domain #2 (see Fig. 14(b)) as illustrated in Figs. 14(a) and 14(b). As illustrated in Fig. 14(b), the flow 1 and the flow 2 in the domain #2 have the same packet identification condition, and thus the flows are mixed (competing).

Thus, according to the present exemplary embodiment, in order to avoid the mixture of the flows at the boundary between the domains as described above, the flow verification unit 132 verifies whether the set flow competes with the newly-decomposed flow.

The flow verification unit 132 acquires the information on the set flows held in the flow DB 131. The flow information is provided in a combination of inter-domain flow information and domain-based decomposed flow information.

The flow verification unit 132 determines whether the mixture illustrated in Fig. 14(b) is occurring at the boundary between the domains. When the mixture is occurring, the flow verification unit 132 asks the flow change unit 133 for the processing of avoiding the mixture of the flow (the flow 2 herein) to be newly set.

When receiving a flow correction request, the flow change unit 133 computes a packet identification condition not used in the already-set flow in the boundary node as the traffic inlet port of the domain #2, and assumes it as the packet identification condition of the flow 2 in the domain 2. That is, the flow change unit 133 uses the packet identification condition of the inter-domain flow for the packet identification condition of the flow to be set for the communication nodes in the domain #1, and changes the packet identification condition of the flow to be set for the nodes in the domain #2 into different contents from the packet identification condition of the flow already set for the nodes.

In this situation, however, the header of a packet output from the domain #1 is different from the flow 2 in the domain #2 in terms of the identification condition. Thus, the flow change unit 133 changes the termination processing method in the flow 2 in the domain #1 to match with the packet identification condition of the flow 2 in the domain #2.

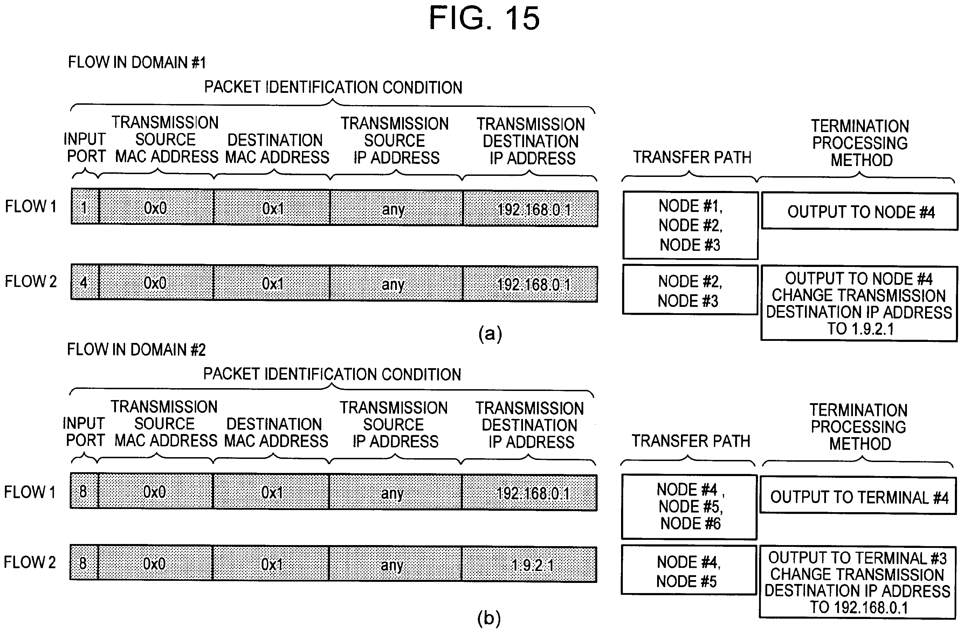

Figs. 15(a) and 15(b) are the explanatory diagrams illustrating the examples in which the flows illustrated in Figs. 14(a) and 14(b) are changed. In the examples illustrated in Figs. 15(a) and 15(b), the flow change unit 133 changes the value of the transmission destination IP address field in the packet header to 1.9.2.1 in the termination processing method for the flow 2 in the domain #1. Further, the flow change unit 133 assumes the transmission destination IP address in the packet identification condition of the flow 2 in the domain #2 at 1.9.2.1.

In this way, when the flows are competing, the flow change unit 133 changes the packet identification condition of the decomposed flow into different contents from the packet identification condition of the flow already set for the nodes, thereby avoiding the packet identification conditions at the reception boundary of the domain #2 from being mixed (competing).

Specifically, when the flows are competing, the flow change unit 133 changes at least part of the packet identification condition in the flow set for the nodes in the packet transfer destination domain (the domain #2 herein) into a different condition from the packet identification condition of the packet processing rule already set for the nodes. Additionally, the flow change unit 133 adds the processing of changing header information to the processing contents of the processing rule such that the header information of a packet to be transferred matches with the changed condition in the flow set for the nodes in the packet transfer source domain (the domain #1 herein). In this way, the competition at the reception boundary in the transfer destination domain can be avoided.

Further, in the examples illustrated in Figs. 15(a) and 15(b), in order to return the header of the packet to the original in the node #5 as the end of the domain #2, the flow change unit 133 designates the processing of assuming the value of the transmission destination IP address field of the packet header at 192.168.0.1 for the termination processing method of the flow 2 in the domain #2.

The processing is designated assuming that the terminal 43 cannot normally receive a packet whose packet header is changed. Therefore, when the terminal 43 can normally receive a packet whose packet header is changed, the flow change unit 133 does not need to designate the processing.

There has been described, according to the present exemplary embodiment, the processing in which the flow change unit 133 changes the value of a specific field in the packet header in order to avoid packet identification information from being mixed. The method for avoiding packet identification information from being mixed is not limited to the method for changing the value of a specific field in the packet header, and may employ any method to which the nodes correspond. The flow change unit 133 may avoid packet identification information from being mixed by inserting a specific value into the packet header, such as inserting a MPLS header or VLAN tag.

As described above, according to the present exemplary embodiment, the flow change unit 133 changes the packet identification condition of the converted flow into different contents from the packet identification condition of the flow already set for the nodes. Thereby, the flows can be prevented from competing with each other in addition to the effects of the first exemplary embodiment. Further, according to the present exemplary embodiment, the flow computation apparatus 50 does not need to be mounted with a complicated flow management algorithm, thereby reducing cost for developing the flow computation apparatus 50.

In the network combination apparatus 10 according to the present exemplary embodiment, the boundary search unit 120 automatically searches an inter-domain link. Specifically, the boundary search unit 120 in the network combination apparatus 10 transmits a search packet including the identification information on the node #3 connected to the node #4 in the domain #2 and the ports provided in the node #3 to the control apparatus #1. The search packet transmission unit 232 in the control apparatus #1 controls the received search packet to be transmitted to the node #3 and to be then transmitted from the port p7.

At this time, the network combination apparatus 10 (specifically, the boundary search unit 120) may assume a port other than the ports connecting the communication nodes controlled by the control apparatus #1 as a boundary candidate port.

When the node #3 transmits a search packet to the node #4, the port p8 of the node #4 receives the packet. The node #4 transmits the search packet to the control apparatus #2 in order to ask the contents of the search packet. The search packet transmission unit 232 in the control apparatus #2 transmits the search packet received from the node #4 to the network combination apparatus 10. At this time, the search packet transmission unit 232 transmits the received search packet further including the identification information on the node #4 and the port p8 receiving the search packet to the network combination apparatus 10.

The boundary search unit 120 receives the search packet from the control apparatus #2, and stores the boundary link information in which the node #3 and the port p7 as the packet transmission source are associated with the node #4 and the port p8 as the packet transmission destination in the inter-domain link DB 121. Subsequently, the topology combination unit 110 combines a plurality of topologies based on the boundary link information stored in the inter-domain link DB 121. Thereby, cost at which the operator sets information for the nodes can be reduced.

### <First variant>

Variants of the present exemplary embodiment will be described below. Other methods for searching an inter-domain link will be described according to the following variants. The contents of the topology combination processing and the flow decomposition processing are the same as the contents according to the first exemplary embodiment or the second exemplary embodiment.

A method in which the network combination apparatus 10 periodically searches an inter-domain link will be described according to a first variant. The searching is performed by exchanging a search packet via a physical network as in the second exemplary embodiment.

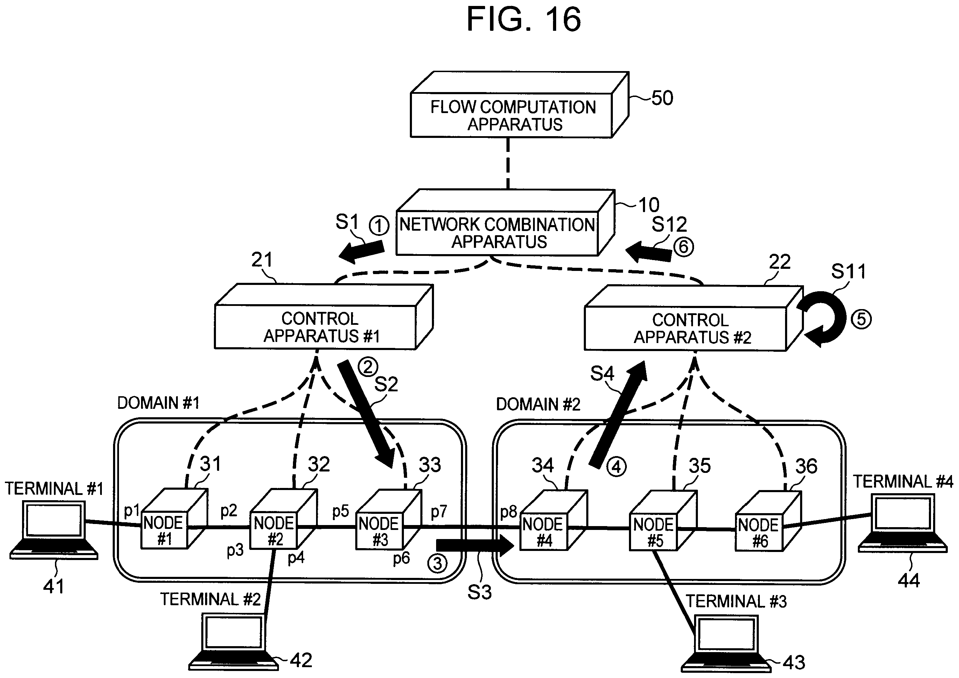

Fig. 16 is an explanatory diagram illustrating an exemplary inter-domain link search processing according to the first variant. At first, the network combination apparatus 10 instructs the control apparatus #1 to create an inter-domain link search packet and to transmit it from a boundary candidate port. The control apparatus #1, which receives the search packet transmission instruction, specifies which node in the physical network the designated boundary candidate port is mounted on, and instructs the node #3 to output the search packet from the specified port.

The network combination apparatus 10 (specifically, the boundary search unit 120) may assume a port other than the ports connecting the communication nodes controlled by the control apparatus #1 as a boundary candidate port.

The search packet transmitted from the node #3 via the physical link is sent to the boundary node #4 in the opposite domain. The node #4 notifies the received search packet as well as its ID and the reception port ID to the control apparatus #2. The processing is the same as in the second exemplary embodiment, and the contents of the search packet are also the same. That is, the processing in step S1 to step S4 illustrated in Fig. 16 is the same as the processing in step S1 to step S4 illustrated in Fig. 12

The control apparatus #2, which is notified of the search packet reception, acquires the node #3 and the port p7 as the boundary information on the domain #1 as well as the domain #1 as the domain ID from the search packet. Further, the control apparatus #2 acquires the information on the node #4 and the port p8 as the information on where the search packet is received (node) from the search packet. The topology management unit 230 (specifically, the search packet sorting unit 231) detects, based on the information, that the port p8 of the node #4 is connected to the port p7 of the node #3 in the domain #1 via the link in the domain #2. The search packet transmission unit 232 creates inter-domain link information based on the connection information (step S11). The search packet transmission unit 232 may create the inter-domain link information including the identification information of its managing domain.

It is assumed that the IDs of the node and port in the physical network are different from the object IDs of the node and port in the topology information in the domain notified to the network combination apparatus 10. In this case, the boundary search unit 120 converts the object IDs indicating the reception position into the object IDs in the topology information, and may employ the converted information for the inter-domain link information.

The control apparatus #2 (specifically, the search packet transmission unit 232) notifies the thus-created inter-domain link information to the network combination apparatus 10 (step S12). Therefore, the network combination apparatus 10 can detect the inter-domain link information from the notified information.

The control apparatus may notify the inter-domain link information as an independent event, or may notify the contents indicating the updated topology information of its domain after adding the inter-domain link information to the topology information of its domain.

As described above, the present variant is such that the control apparatus #2 (specifically, the search packet transmission unit 232) generates boundary link information based on a search packet received from the node #4 and transmits the generated boundary link information to the network combination apparatus 10. The boundary search unit 120 then stores the received boundary link information in the inter-domain link DB 121. Also with the structure, it is possible to reduce cost required for traffic control of a network integrating a plurality of network domains therein.

### <Second variant>

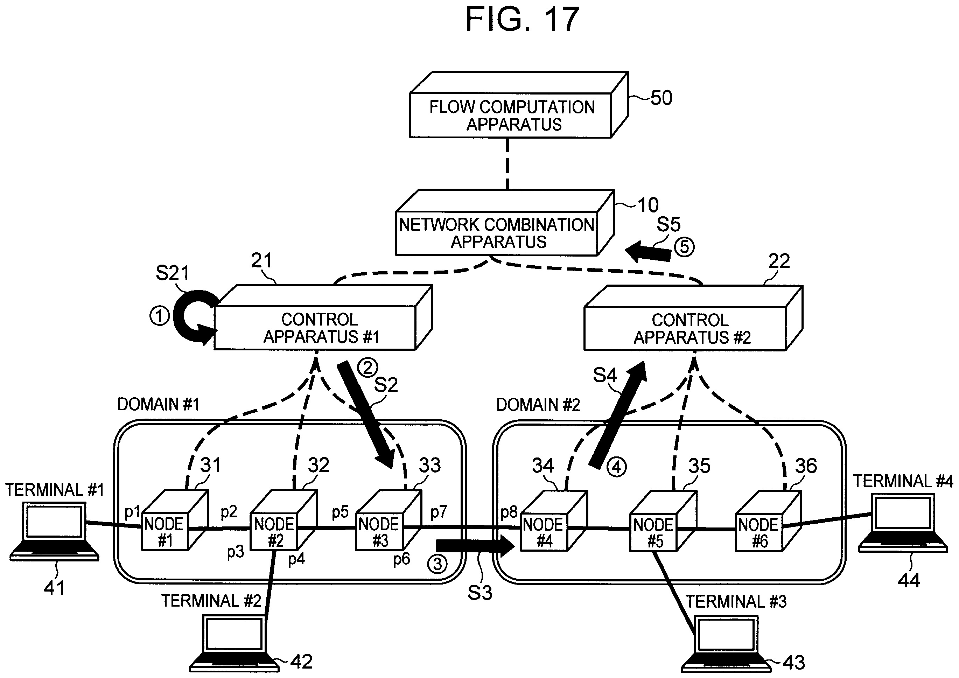

Fig. 17 is an explanatory diagram illustrating an exemplary inter-domain link search processing according to a second variant. A method in which the control apparatus generates a search packet and searches an inter-domain link will be described according to the second variant.

At first, the control apparatus #1 (specifically, the search packet transmission unit 232) creates an inter-domain link search packet and transmits it from a boundary candidate port (step S21). The search packet transmission unit 232 asks the topology management unit 230 about a boundary candidate port, and uses a port responded by the topology management unit 230 as a candidate.

The topology management unit 230 may select a port other than the inter-node links in the domain as a boundary candidate port, may select a port based on externally-dynamic setting or startup static setting, or may select a port based on a situation of a packet flowing into each port. Further, the topology management unit 230 may assume a port other than the ports connecting the communication nodes in the domain as a boundary candidate port.

The search packet transmission unit 232 may use the object IDs in the topology information notified from the control apparatus to the network combination apparatus 10 for the node ID and the port ID to be included in the search packet.

The control apparatus #1 instructs the node #3 to output the created search packet from the selected port. The search packet transmitted from the node #3 via the physical link is sent to the boundary node #4 in the opposite domain. The node #4 notifies the received search packet as well as its ID and the reception port ID to the control apparatus #2 (steps S2 to S4).

When a domain ID is included in the search packet but is not the domain ID of the control apparatus #2 (or the domain #2), the control apparatus #2, which is notified of the search packet reception, notifies the search packet to the network combination apparatus 10 (step S5). The search packet reception notification from the control apparatus #2 to the network combination apparatus 10 is the same as in the second exemplary embodiment. The network combination apparatus 10 creates inter-domain link information based on the notification.

As described above, the control apparatus #1 generates a search packet according to the present variant unlike the second exemplary embodiment in which the network combination apparatus 10 creates a search packet. Also with the structure, it is possible to reduce cost required for traffic control of a network integrating a plurality of network domains therein.

### <Third variant>

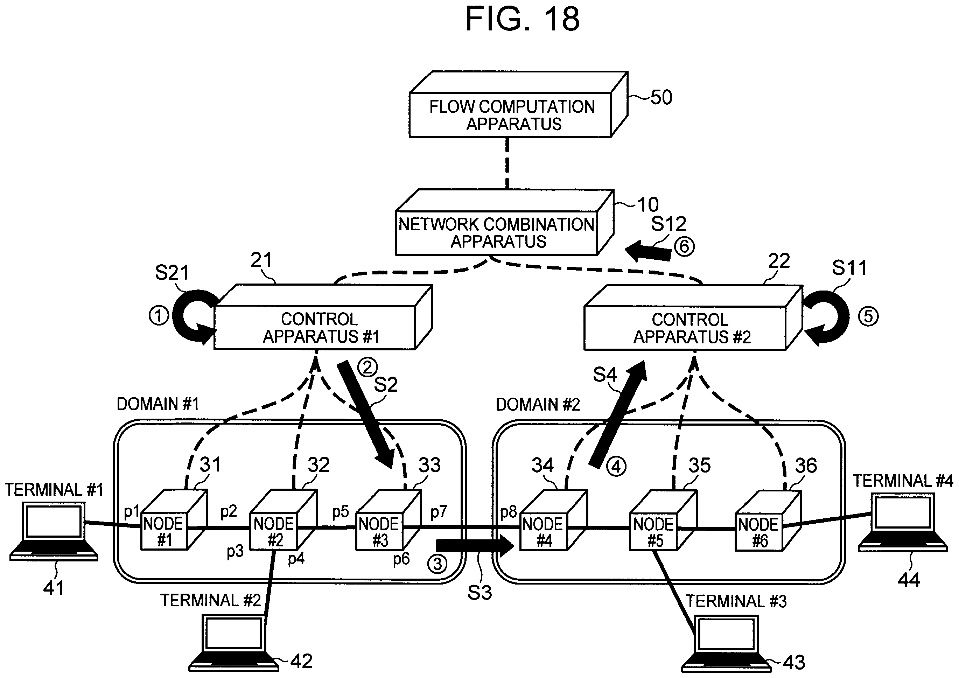

Fig. 18 is an explanatory diagram illustrating an exemplary inter-domain link search processing according to a third variant. A method in which the control apparatus #1 generates a search packet and the control apparatus #2 creates boundary link information thereby to search an inter-domain link will be described according to the third variant. Specifically, the third variant is a combination of the first variant and the second variant.

At first, the control apparatus #1 (specifically, the search packet transmission unit 232) creates an inter-domain link search packet and transmits it from a boundary candidate port (step S21). The search packet transmission unit 232 asks the topology management unit 230 about a boundary candidate port, and uses a port responded by the topology management unit 230 as a candidate.

The topology management unit 230 may select a port other than the inter-node links in the domain as a boundary candidate port, may select a port based on externally-dynamic setting or startup static setting, or may select a port based on a situation of a packet flowing into each port. Further, the topology management unit 230 may assume a port other than the ports connecting the communication nodes in the domain as a boundary candidate port.

The search packet transmission unit 232 may use the object IDs in the topology information notified from the control apparatus to the network combination apparatus 10 for the node ID and the port ID to be included in the search packet.

The control apparatus #1 instructs the node #3 to output the created search packet from the selected port. The search packet transmitted from the node #3 via the physical link is sent to the boundary node #4 in the opposite domain. The node #4 notifies the received search packet as well as its ID and the reception port ID to the control apparatus #2 (steps S2 to S4).

The control apparatus #2, which is notified of the search packet reception, acquires the node #3 and the port p7 as the boundary information of the domain #1 as well as the domain #1 as the domain ID from the search packet. Further, the control apparatus #2 acquires the information on the node #4 and the port p8 as the information on where the search packet is received (node) from the search packet. The topology management unit 230 (specifically, the search packet sorting unit 231) detects, based on the information, that the port p8 of the node #4 is connected to the port p7 of the node #3 in the domain #1 in the domain #2. Thus, the search packet transmission unit 232 creates inter-domain link information based on the connection information (step S11). The search packet transmission unit 232 may create the inter-domain link information including the identification information of its managing domain.

It is assumed that the IDs of the node and the port in the physical network are different from the object IDs of the node and port in the topology information of the domain notified to the network combination apparatus 10. In this case, the boundary search unit 120 may convert the object IDs indicating the reception position into the object IDs in the topology information and may use the converted information for the inter-domain link information.

The control apparatus #2 (specifically, the search packet transmission unit 232) notifies the thus-created inter-domain link information to the network combination apparatus 10 (step S12). Therefore, the network combination apparatus 10 can detect the inter-domain link information from the notified information.

The control apparatus may notify the inter-domain link information as an independent event, or may notify the contents indicating the updated topology information of its domain after adding the inter-domain link information to the topology information of its domain.

<Fourth variant>

A method in which the flow computation apparatus 50 creates an inter-domain link search packet will be described according to a fourth variant.

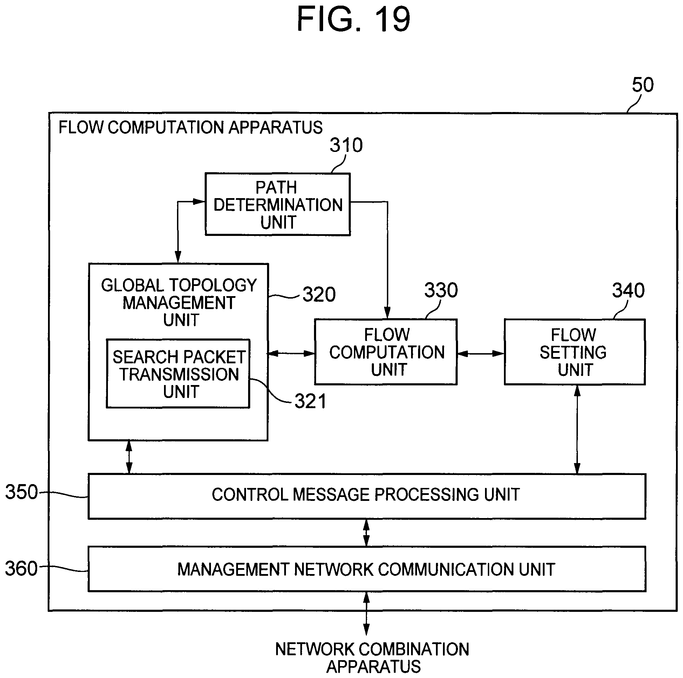

Fig. 19 is a block diagram illustrating an exemplary structure of the flow computation apparatus 50. The flow computation apparatus 50 illustrated in Fig. 19 may be used for the first exemplary embodiment, the second exemplary embodiment, and other variants. The flow computation apparatus 50 illustrated in Fig. 19 includes a path determination unit 310, a global topology management unit 320, a flow computation unit 330, a flow setting unit 340, a control message processing unit 350, and a management network communication unit 360.

The management network communication unit 360 makes communication with the network combination apparatus 10.

The control message processing unit 350 passes messages from the network combination apparatus 10 and messages to the network combination apparatus 10 to an appropriate control function.

The flow computation unit 330 computes a flow for controlling a traffic between the domains. A flow may be computed in response to a request from the network combination apparatus 10, and may be computed in response to a manager's explicit instruction.

The flow setting unit 340 transmits the flow computed by the flow computation unit 330 to the network combination apparatus 10, and instructs the same to set it for each control apparatus.

The path determination unit 310 computes a path to be used for packet transfer. A method for computing a path to be used for packet transfer may employ a well-known typical method.

The global topology management unit 320 manages one of or both the global topology combining the topologies of a plurality of domains therein and the uncombined topologies of a plurality of domains.

The global topology management unit 320 has a search packet transmission unit 321. The search packet transmission unit 321 creates an inter-domain link search packet.

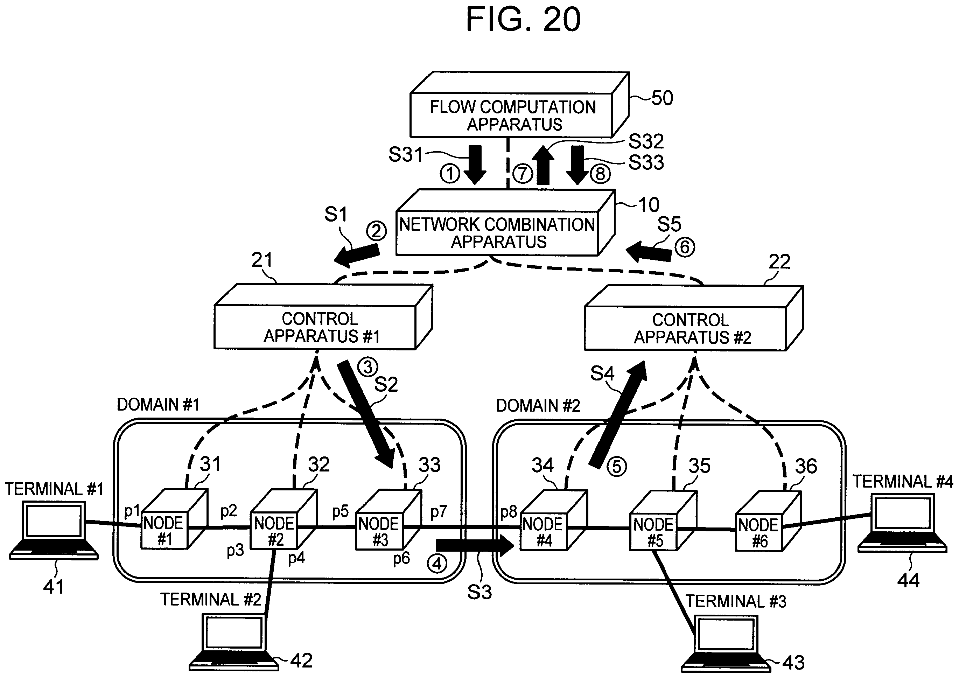

Fig. 20 is an explanatory diagram illustrating an exemplary inter-domain link search processing according to the fourth variant. The search packet transmission unit 321 in the flow computation apparatus 50 selects a search candidate port from the topology information managed by the global topology management unit 320.

The search packet transmission unit 321 may select a port other than the inter-node links in the domain as a search candidate port, may select a port based on externally-dynamic setting or startup static setting, or may select a port based on a situation of a packet flowing into each port.

The search packet transmission unit 321 may use the object IDs in the topology information managed by the global topology management unit 320 for the node ID and the port ID to be included in the search packet.

The flow computation apparatus 50 (specifically, the search packet transmission unit 321) instructs the network combination apparatus 10 to transmit the created search packet (step S31).

The network combination apparatus 10 (more specifically, the boundary search unit 120), which receives the search packet transmission instruction, converts the node ID and the port ID for outputting the search packet into the object IDs used in the uncombined topology information. The boundary search unit 120 then instructs the control apparatus #1 to transmit the search packet from a position specified by the node ID and the port ID (step S1).

The control apparatus #1, which receives the search packet transmission instruction, specifies which node in the physical network the designated boundary candidate port is mounted on, and instructs the node #3 to output the search packet from the specified port. The search packet transmitted from the node #3 via the physical link is sent to the boundary node #4 in the opposite domain. The node #4 notifies the received search packet as well as its ID and the reception port ID to the control apparatus #2 (steps S2 to S4). That is, the processing in step S1 to step S4 illustrated in Fig. 20 is the same as the processing in step S1 to step S4 illustrated in Fig. 12.

When a domain ID is included in the search packet but is not the domain ID of the control apparatus #2 (or the domain #2), the control apparatus #2, which is notified of the search packet reception, notifies the search packet to the network combination apparatus 10 (step S5).

The network combination apparatus 10 (specifically, the boundary search unit 120), which receives the search packet, converts the IDs indicating where the searched packet is received in the domain #2 (specifically, the node #4 and the port p8) into the object IDs used in the combined topology (or the global topology managed by the flow computation apparatus 50). The boundary search unit 120 then transmits the search packet reception notification to the flow computation apparatus 50 (step S32). That is, the boundary search unit 120 transfers the search packet to the flow computation apparatus 50.

When the flow computation apparatus 50 is notified of the search packet reception, the global topology management unit 320 grasps the connection source port of the inter-domain link and the connection destination port of the inter-domain link from the information included in the search packet, and creates inter-domain link information. The flow computation apparatus 50 (specifically, the global topology management unit 320) then adds the created inter-domain link information to the global topology information managed by the global topology management unit 320. Further, the global topology management unit 320 notifies the created inter-domain link information to the network combination apparatus 10 (step S33). The network combination apparatus 10 (specifically, the boundary search unit 120) stores the received inter-domain link information in the inter-domain link DB 121.

As described above, according to the present variant, the flow computation apparatus 50 (specifically, the search packet transmission unit 321) creates a search packet and searches an inter-domain link. Also with the structure, it is possible to reduce cost for traffic control of a network integrating a plurality of network domains therein.

### <Fifth variant>

According to a fifth variant, the flow computation apparatus 50 creates an inter-domain link search packet as in the fourth variant. The present variant is different from the fourth variant in that the network combination apparatus 10 generates inter-domain link information (boundary link information).

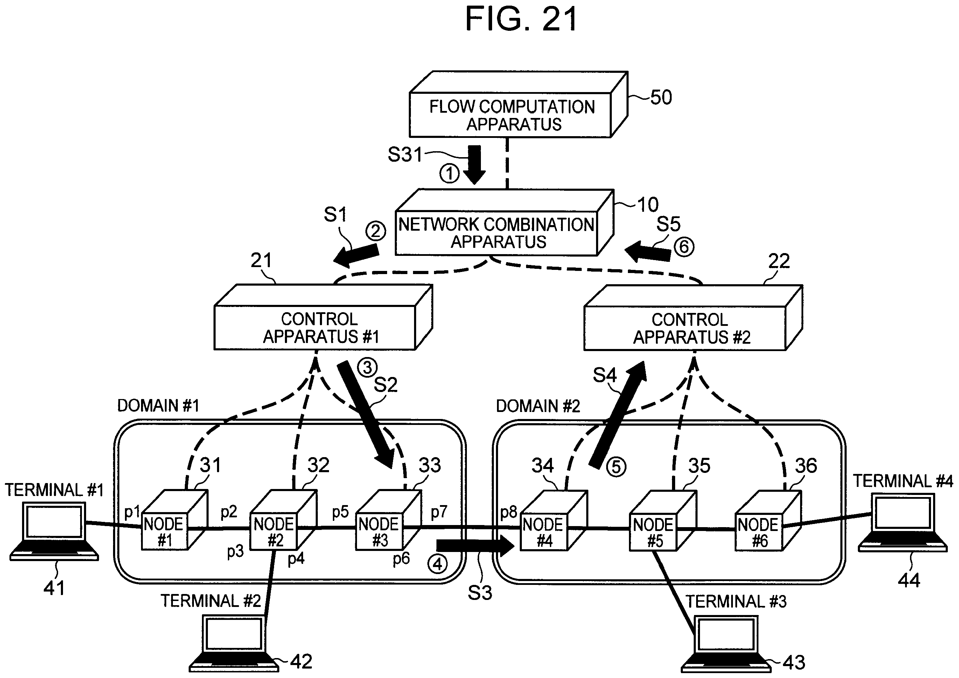

Fig. 21 is an explanatory diagram illustrating an exemplary inter-domain link search processing according to the fifth variant. The search packet transmission unit 321 in the flow computation apparatus 50 selects a search candidate port from the topology information managed by the global topology management unit 320.

The search packet transmission unit 321 may select a port other than the inter-node links in the domain as a search candidate port, may select a port based on externally-dynamic setting or startup static setting, or may select a port based on a situation of a packet flowing into each port.

The search packet transmission unit 321 may use the object IDs in the topology information managed by the global topology management unit 320 for the node ID and the port ID to be included in the search packet.

The flow computation apparatus 50 (specifically, the search packet transmission unit 321) instructs the network combination apparatus 10 to transmit the created search packet (step S31).

The network combination apparatus 10 (more specifically, the boundary search unit 120), which receives the search packet transmission instruction, converts the node ID and the port ID for outputting the search packet into the object IDs used in the uncombined topology information. The boundary search unit 120 then instructs the control apparatus #1 to transmit the search packet from a position specified by the node ID and the port ID (step S1).

The control apparatus #1, which receives the search packet transmission instruction, specifies which node in the physical network the designated boundary candidate port is mounted on, and instructs the node #3 to output the search packet from the specified port. The search packet transmitted from the node #3 via the physical link is sent to the boundary node #4 in the opposite domain. The node #4 notifies the received search packet as well as its ID and the reception port ID to the control apparatus #2 (steps S2 to S4). That is, the processing in step S1 to step S4 illustrated in Fig. 21 is the same as the processing in step S1 to step S4 illustrated in Fig. 12.

When a domain ID is included in the search packet but is not the domain ID of the control apparatus #2 (or the domain #2), the control apparatus #2, which is notified of the search packet reception, notifies the search packet to the network combination apparatus 10 (step S5).

The network combination apparatus 10 (specifically, the boundary search unit 120), which receives the search packet, grasps the connection source port of the inter-domain link and the connection destination port of the inter-domain link from the information included in the search packet, and creates inter-domain link information. The boundary search unit 120 then stores the created inter-domain link information in the inter-domain link DB 121.

### <Sixth variant>

According to a sixth variant, the flow computation apparatus 50 creates an inter-domain link search packet as in the fourth variant. The present variant is different from the fourth variant in that the control apparatus #2 generates inter-domain link information (boundary link information).

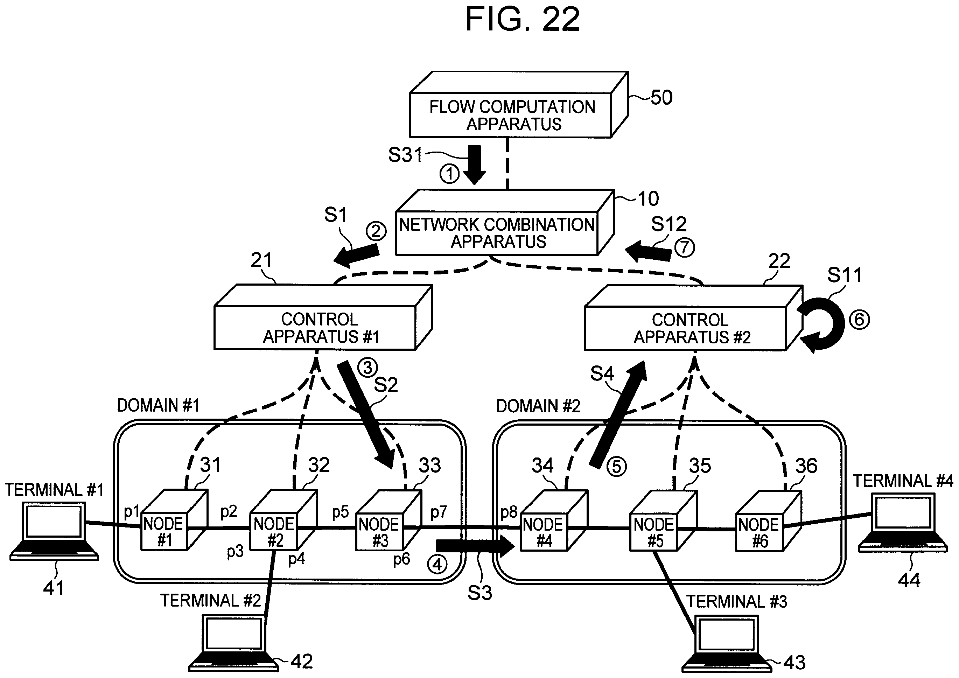

Fig. 22 is an explanatory diagram illustrating an exemplary inter-domain link search processing according to the sixth variant. The search packet transmission unit 321 in the flow computation apparatus 50 selects a search candidate port from the topology information managed by the global topology management unit 320.

The search packet transmission unit 321 may select a port other than the inter-node links in the domain as a search candidate port, may select a port based on externally-dynamic setting or startup static setting, or may select a port based on a situation of a packet flowing into each port.

The search packet transmission unit 321 may employ the object IDs in the topology information managed by the global topology management unit 320 for the node ID and the port ID to be included in the search packet.

The flow computation apparatus 50 (more specifically, the search packet transmission unit 321) instructs the network combination apparatus 10 to transmit the created search packet (step S31).

The network combination apparatus 10 (more specifically, the boundary search unit 120), which receives the search packet transmission instruction, converts the node ID and the port ID for outputting the search packet into the object IDs used in the uncombined topology information. The boundary search unit 120 then instructs the control apparatus #1 to transmit the search packet from a position specified by the node ID and the port ID (step S1).

The control apparatus #1, which receives the search packet transmission instruction, specifies which node in the physical network the designated boundary candidate port is mounted on, and instructs the node #3 to output the search packet from the specified port. The search packet transmitted from the node #3 via the physical link is sent to the boundary node #4 in the opposite domain. The node #4 notifies the received search packet as well as its ID and the reception port ID to the control apparatus #2 (steps S2 to S4). That is, the processing in step S1 to step S4 illustrated in Fig. 22 is the same as the processing in step S1 to step S4 illustrated in Fig. 12.

The control apparatus #2, which is notified of the search packet reception, acquires the node #3 and the port p7 as the boundary information of the domain #1 as well as the domain #1 as the domain ID from the search packet. Further, the control apparatus #2 acquires the information on the node #4 and the port p8 as the information on where the search packet is received (node) from the search packet. The topology management unit 230 (specifically, the search packet sorting unit 231) detects, based on the information, that the port p8 of the node #4 is connected to the port p7 of the node #3 in the domain #1 in the domain #2. Thus, the search packet transmission unit 232 creates inter-domain link information based on the connection information (step S11). The search packet transmission unit 232 may create the inter-domain link information including the identification information on its managing domain.

It is assumed that the IDs of the node and the port in the physical network are different from the object IDs of the node and the port in the topology information of the domain notified to the network combination apparatus 10. In this case, the boundary search unit 120 converts the object IDs indicating the reception position into the object IDs in the topology information, and may employ the converted information for the inter-domain link information.

The control apparatus #2 (specifically, the search packet transmission unit 232) notifies the thus-created inter-domain link information to the network combination apparatus 10 (step S12). Therefore, the network combination apparatus 10 can detect the inter-domain link information from the notified information.

It is assumed that the object IDs used in the topology information notified from each control apparatus to the network combination apparatus 10 is not the same as the object IDs used in the combined topology information notified from the network combination apparatus 10 to the flow computation apparatus 50. In this case, the network combination apparatus 10 (specifically, the boundary search unit 120) converts the node ID and the port ID included in the received inter-domain link information by use of the object ID management DB 111.

The control apparatus may notify the inter-domain link information as an independent event, or may notify the contents indicating the updated topology information of its domain after adding the inter-domain link information to the topology information of its domain.

### <Seventh variant>

According to a seventh variant, the network combination apparatus 10 creates a search packet as in the second exemplary embodiment. The present variant is different from the second exemplary embodiment in that the network combination apparatus 10 transfers a search packet to the flow computation apparatus 50, and stores created inter-domain link information (boundary link information).

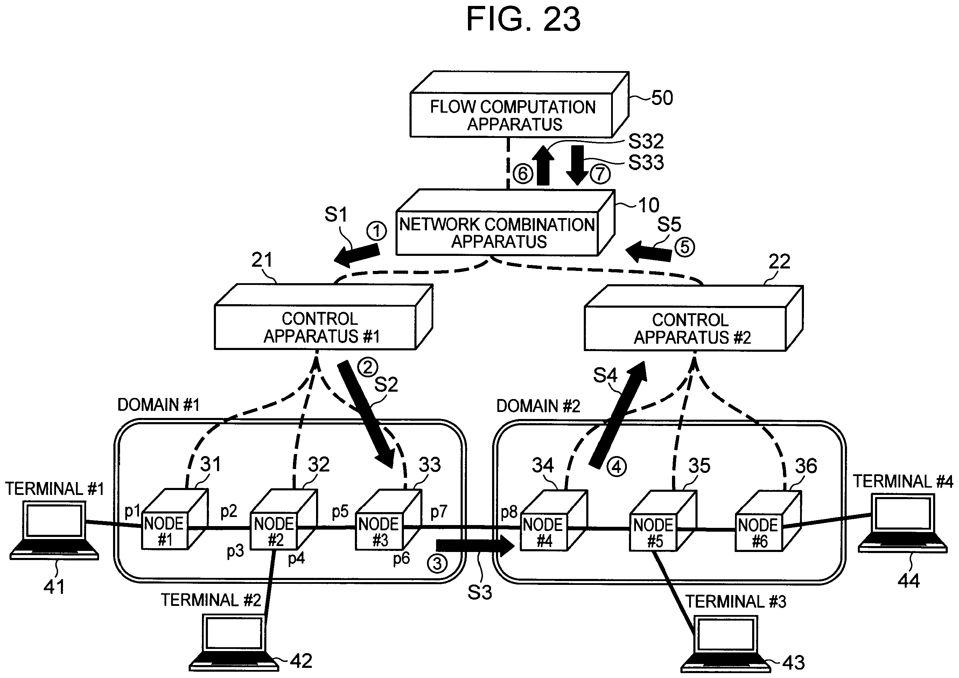

Fig. 23 is an explanatory diagram illustrating an exemplary inter-domain link search processing according to the seventh variant. At first, the network combination apparatus 10 instructs the control apparatus #1 to create an inter-domain link search packet and to transmit it from a boundary candidate port. The control apparatus #1, which receives the search packet transmission instruction, specifies which node in the physical network the designated boundary candidate port is mounted on, and instructs the node #3 to output the search packet from the specified port.

The network combination apparatus 10 (specifically, the boundary search unit 120) may assume a port other than the ports connecting the communication nodes controlled by the control apparatus #1 as a boundary candidate port.

The search packet transmitted from the node #3 via the physical link is sent to the boundary node #4 in the opposite domain. The node #4 notifies the received search packet as well as its ID and the reception port ID to the control apparatus #2. That is, the processing in step S1 to step S4 illustrated in Fig. 23 is the same as the processing in step S1 to step S4 illustrated in Fig. 12.

When a domain ID is included in the search packet but is not the domain ID of the control apparatus #2 (or domain #2), the control apparatus #2, which is notified of the search packet reception, notifies the search packet to the network combination apparatus 10 (step S5).

The network combination apparatus 10 (specifically, the boundary search unit 120), which receives the search packet, converts the IDs indicating where the search packet is received (specifically, the node #4 and the port p8) in the domain #2 into the object IDs used in the combined topology (or the global topology managed by the flow computation apparatus 50). The boundary search unit 120 then transmits the search packet reception notification to the flow computation apparatus 50 (step S32). That is, the boundary search unit 120 transfers the search packet to the flow computation apparatus 50.

When the flow computation apparatus 50 is notified of the search packet reception, the global topology management unit 320 grasps the connection source port of the inter-domain link and the connection destination port of the inter-domain link from the information included in the search packet, and creates inter-domain link information. The flow computation apparatus 50 (specifically, the global topology management unit 320) then adds the created inter-domain link information to the global topology information managed by the global topology management unit 320. Further, the global topology management unit 320 notifies the created inter-domain link information to the network combination apparatus 10 (step S33). The network combination apparatus 10 (specifically, the boundary search unit 120) stores the received inter-domain link information in the inter-domain link DB 121.

### <Eighth variant>

According to an eighth variant, the control apparatus creates a search packet as in the second variant. The present variant is different from the second variant in that the network combination apparatus 10 transfers a search packet to the flow computation apparatus 50 and stores created inter-domain link information (boundary link information).

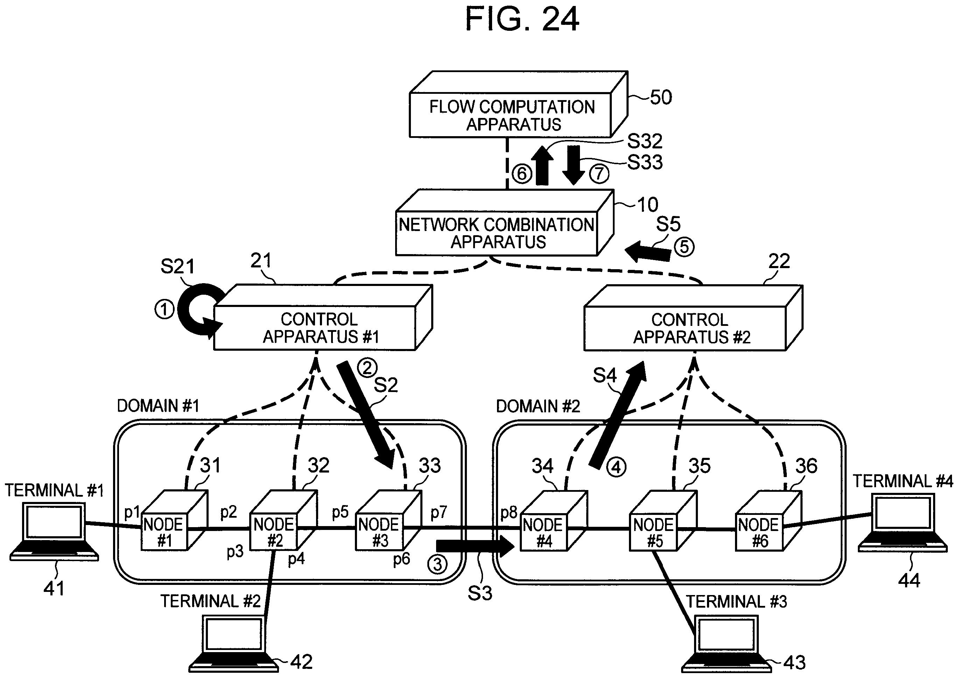

Fig. 24 is an explanatory diagram illustrating an exemplary inter-domain link search processing according to the eighth variant. At first, the control apparatus #1 (specifically, the search packet transmission unit 232) creates an inter-domain link search packet and transmits it from a boundary candidate port (step S21). The search packet transmission unit 232 asks the topology management unit 230 about a boundary candidate port, and uses a port responded from the topology management unit 230 as a candidate.

The topology management unit 230 may select a port other than the inter-node links in the domain as a boundary candidate port, may select a port based on externally-dynamic setting or startup static setting, or may select a port based on a situation of a packet flowing into each port. Further, the topology management unit 230 may assume a port other than the ports connecting the communication nodes in the domain as a boundary candidate port.

The search packet transmission unit 232 may employ the object IDs in the topology information notified from the control apparatus to the network combination apparatus 10 for the node ID and the port ID to be included in the search packet.

The control apparatus #1 instructs the node #3 to output the created search packet from the selected port. The search packet transmitted from the node #3 via the physical link is sent to the boundary node #4 in the opposite domain. The node #4 notifies the received search packet as well as its ID and the reception port ID to the control apparatus #2 (steps S2 to S4).

When a domain ID is included in the search packet but is not the domain ID of the control apparatus #2 (or the domain #2), the control apparatus #2, which is notified of the search packet reception, notifies the search packet to the network combination apparatus 10 (step S5).

The network combination apparatus 10 (specifically, the boundary search unit 120), which receives the search packet, converts the IDs indicating where the search packet is received in the domain #2 (specifically, the node #4 and the port p8) into the object IDs used in the combined topology (or the global topology managed by the flow computation apparatus 50). The boundary search unit 120 then transmits the search packet reception notification to the flow computation apparatus 50 (step S32). That is, the boundary search unit 120 transfers the search packet to the flow computation apparatus 50.

When the flow computation apparatus 50 is notified of the search packet reception, the global topology management unit 320 grasps the connection source port of the inter-domain link and the connection destination port of the inter-domain link from the information included in the search packet, and creates inter-domain link information. The flow computation apparatus 50 (specifically, the global topology management unit 320) then adds the created inter-domain link information to the global topology information managed by the global topology management unit 320. Further, the global topology management unit 320 notifies the created inter-domain link information to the network combination apparatus 10 (step S33). The network combination apparatus 10 (specifically, the boundary search unit 120) stores the received inter-domain link information in the inter-domain link DB 121.

The second exemplary embodiment and the variants described above assume that an identifier used for the topology of a domain managed by the control apparatus in the domain is different between the domains. In this case, when receiving inter-domain link information or creating inter-domain link information, the boundary search unit 120 may convert and integrate the identification information of each object into the identification information used in an inter-domain topology. That is, the boundary search unit 120 may store the information in which the node identifier and the port identifier included in the inter-domain link information are converted into the identifiers used in the topology information managed by the flow computation apparatus 50.

Further, according to the second exemplary embodiment and the variants, a node ID and a port ID are included in a search packet used for searching an inter-domain link. Thus, the range of the port IDs in the topology information of the domain managed by each control apparatus and the entire topology information created by the network combination apparatus 10 and managed by the flow computation apparatus 50 is discriminated from the range of the IDs of the physical nodes and ports for use.

By doing so, the same format can be used for a search packet used for searching the topology of a domain and for a packet used for finding an inter-domain link. That is, it does not need to be expanded for the packets, respectively.

A domain ID is added to a search packet, and thus the same packet may be used for the in-domain topology search and the search packet. For example, when the control apparatus 21 creates a search packet, the search packet transmission unit 232 in the control apparatus 21 may add the identification information of the domain #1 uniquely identifiable in the network to the search packet. Further, for example, when the network combination apparatus 10 creates a search packet, the boundary search unit 120 in the network combination apparatus 10 may add the identification information of the domain #1 uniquely identifiable in the network to the search packet. Further, for example, when the flow computation apparatus 50 creates a search packet, the search packet transmission unit 321 in the flow computation apparatus 50 may add the identification information of the domain #1 uniquely identifiable in the network to the search packet.

According to the fourth variant, the fifth variant, and the sixth variant, a port other than the ports connecting the communication nodes controlled by each control apparatus may be used as a port candidate from which the flow computation apparatus 50 outputs a search packet.

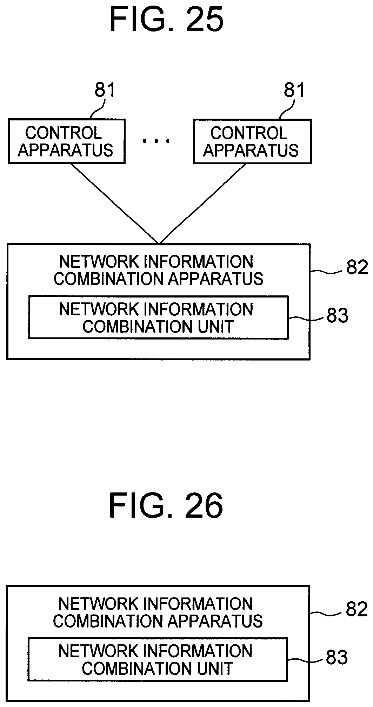

An outline of the present invention will be described below. Fig. 25 is a block diagram illustrating an outline of a communication system according to the present invention. The communication system according to the present invention includes: a plurality of control apparatuses 81 (the control apparatus 21 and the control apparatus 22, for example) each for controlling packet transmission by one or more communication nodes (such as the nodes 31 to 33 and the nodes 34 to 36) connected to the control apparatus 81, by setting a packet processing rule (such as flow) in the communication nodes; and a network information combination apparatus 82 (the network combination apparatus 10, for example) connected to the plurality of control apparatuses 81 and a computation apparatus (the flow computation apparatus 50, for example) for computing a packet processing rule across domains (such as the domain #1 and the domain #2) each of which indicates a range including one or more communication nodes controlled by a different one of the plurality of control apparatuses 81.

The network information combination apparatus 82 includes a network information combination unit 83 (the topology combination unit 110, for example) for acquiring network information (such as topology information) on a connection relationship between communication nodes controlled by each control apparatus 81 from each control apparatus 81 and combining a plurality of items of network information acquired from each control apparatus 81 (creating an inter-domain topology) based on boundary link information (such as inter-domain link information) on a connection relationship at a boundary between the domains, and a network information notification unit 84 (the topology combination unit 110, for example) for notifying the combined network information to the computation apparatus.

With the structure, when a traffic of a network integrating a plurality of network domains therein is controlled, it is possible to consistently control the traffic in the entire network while reducing cost for the control.

Further, the network information combination apparatus 82 may include a boundary search unit (the boundary search unit 120, for example) for transmitting a search packet including identification information of a first communication node (the node #3, for example) connected to a communication node (the node #4, for example) of other domain (the domain #2, for example) among the communication nodes in a domain (the domain #1, for example) controlled by a first control apparatus 81 (the control apparatus #1, for example) and identification information of a first port (the port p7, for example) provided in the first communication node to the first control apparatus 81 thereby to search a boundary between the domains, and an inter-domain information storage unit (the boundary search unit 120 and the inter-domain link DB 121, for example) for receiving a search packet from a second control apparatus 81 (the control apparatus #2, for example) as a destination apparatus to which a second communication node as a communication node in the other domain receiving the search packet transmitted form the first communication node transmits the search packet further including identification information of the second communication node and identification information of a second port (the port p8, for example) receiving the search packet, generating boundary link information in which the identification information of the first communication node, the identification information of the first port, the identification information of the second communication node, and the identification information on the second port are associated with each other, and storing the generated boundary link information.

Further, the first control apparatus 81 may include a first search packet transmission unit (the search packet transmission unit 232, for example) for controlling a search packet received from the boundary search unit to be transmitted to the first communication node and to be then transmitted from the first port. Further, the second control apparatus 81 may include a second search packet transmission unit (the search packet transmission unit 232, for example) for transmitting a search packet received from the second communication node to the network information combination apparatus 82. Then, the network information combination unit 83 in the network information combination apparatus 82 may combine a plurality of items of network information based on the boundary link information stored in the inter-domain information storage unit.

With the structure, the topology information of a plurality of domains can be automatically collected, thereby reducing cost required for traffic control of a network integrating a plurality of network domains therein.

The network information combination apparatus 82 does not generate boundary link information but instead the second control apparatus 81 may generate boundary link information (according to the first variant ad the third variant, for example). Further, the network information combination apparatus 82 does not create a search packet but instead the first control apparatus 81 may create a search packet (according to the second variant and the third variant, for example).

Further, the computation apparatus may generate a search packet and instruct the network information combination apparatus 82 to transmit the search packet. Then, when receiving a search packet from the second control apparatus 81, the network information combination apparatus 82 may transfer the search packet to the computation apparatus and store boundary link information received from the computation apparatus (according to the fourth variant, for example).

Also when the computation apparatus generates a search packet, the network information combination apparatus 82 may create boundary link information (according to the fifth variant, for example), or the second control apparatus 81 may create boundary link information (according to the sixth variant, for example).

Also when the network information combination apparatus 82 generates a search packet, when receiving a search packet from the second control apparatus 81, the network information combination apparatus 82 may transfer the search packet to the computation apparatus and store boundary link information received from the computation apparatus (according to the seventh variant, for example). Further, also when the first control apparatus 81 generates a search packet, when receiving a search packet from the second control apparatus 81, the network information combination apparatus 82 may transfer the search packet to the computation apparatus and store boundary link information received from the computation apparatus (according to the eighth variant, for example).

Fig. 26 is a block diagram illustrating an outline of the network information combination apparatus according to the present invention. The contents of the network information combination apparatus illustrated in Fig. 26 are the same as the network information combination apparatus 82 illustrated in Fig. 25.

The present invention has been described above with reference to the exemplary embodiments and the examples, but the present invention is not limited to the above exemplary embodiments and the examples. The structure and details of the present invention can be variously changed within the scope of the present invention understandable to those skilled in the art.

The present application claims the priority based on Japanese Patent Application No. 2013-244586 filed on November 27, 2013.

### Reference Signs List

- 10: Network combination apparatus
- 21, 22: Control apparatus
- 31 to 36: Node
- 41 to 44: Terminal
- 50: Flow computation apparatus
- 110: Topology combination unit
- 111: Object ID management DB
- 120: Boundary search unit
- 121: Inter-domain link DB
- 122: Boundary candidate DB
- 130: Flow decomposition unit
- 131: Flow DB
- 132: Flow verification unit
- 133: Flow change unit
- 140, 220, 350: Control message processing unit
- 150, 210, 360: Management network communication unit
- 230: Topology management unit
- 231: Search packet sorting unit
- 232: Search packet transmission unit
- 240: Processing rule computation unit
- 250: Processing rule setting unit
- 260: Node control message processing unit
- 270: Node communication unit
- 310: Path determination unit
- 320: Global topology management unit
- 321: Search packet transmission unit
- 330: Flow computation unit
- 340: Flow setting unit

## Claims

1. A communication system comprising:
a plurality of control apparatuses (21, 22) each configured to control packet transmission by one or more communication nodes (31 to 36) connected to the control apparatus (21, 22), by setting packet processing rules in the communication nodes (31 to 36); and
a network information combination apparatus (10) connected to the plurality of control apparatuses (21, 22) and connected to a computation apparatus (50) wherein the computation apparatus is configured to compute the packet processing rules to be set in the communication nodes (31 to 36) across a plurality of domains,
wherein each domain is indicated by a range of node IDs, the domains including a first domain in which one or more communication nodes (31 to 36) are controlled by a first control apparatus (21), and a second domain in which one or more communication nodes (31 to 36) are controlled by a second control apparatus (22), wherein
the network information combination apparatus (10) includes:
a network information combination unit (110) configured to acquire network information of a connection relationship between the communication nodes (31 to 36) controlled by each of the control apparatuses (21, 22) and combining a plurality of items of network information acquired from each control apparatus (21, 22) based on boundary link information wherein the boundary link information is based on a connection relationship at a boundary between the first and second domains;
a network information notification unit configured to notify the combined network information to the computation apparatus; and
a boundary search unit (120) configured to:
transmit a search packet to the first control apparatus (21) to search a boundary between the domains wherein the search packet includes identification information of a first communication node and identification information of a first port in the first communication node for transmitting the search packet wherein the first communication node is in the first domain controlled by the first control apparatus (21) and is connected to a second communication node in the second domain controlled by the second control apparatus (22);
receive the search packet or boundary link information from the second control apparatus (22)
and to obtain boundary link information wherein the boundary link information comprises an association of the identification information of the first communication node in the first domain, the identification information of the first port of the first communication node for transmitting the search packet, the identification information of the second communication node in the second domain, and the identification information of a second port of the second communication node receiving the search packet; the first control apparatus (21) includes a first search packet transmission unit (232) configured to control the search packet received from the boundary search unit (120) to be transmitted to the first communication node and to be then transmitted from the first port of the first communication node to the second communication node in the second domain,
the second communication node is configured to transmit the search packet to the second control apparatus (22);
the second control apparatus (22) includes a second search packet transmission unit (232) configured to transmit said search packet or boundary link information to the boundary search unit (120), wherein the search packet further includes the identification information of the second communication node in the second domain and the identification information of the second port in the second communication node receiving the search packet.

2. The communication system according to claim 1,
wherein the network information combination apparatus (10) is configured to generate the boundary link information obtained by the boundary search unit (120) based on the search packet received from the second control apparatus (22), and the network information combination apparatus (10) includes an inter-domain information storage unit (121) configured to store the generated boundary link information.

3. The communication system according to claim 1, wherein
the boundary link information is generated by the second search packet transmission unit (232) of the second control apparatus (22) based on the search packet received from the second communication node, and wherein the boundary link information is transmitted to the network information combination apparatus (10), the boundary search unit (120) of the network information combination apparatus (10) is configured to obtain the boundary link information from the second control apparatus (22), and
the network information combination apparatus (10) includes an inter-domain information storage unit (121) configured to store the obtained boundary link information.

4. The communication system according to claim 1,
wherein the network information combination apparatus (10) includes: a search packet transfer unit configured to receive the search packet from the second control apparatus and transfer the received search packet to the computation apparatus (50); and wherein
the computation apparatus (50) is configured to generate the boundary link information based on the search packet,
the boundary search unit (120) of the network information combination apparatus (10) is configured to obtain the boundary link information from the computation apparatus (50), and
the network information combination apparatus (10) includes an inter-domain information storage unit (121) configured to store the obtained boundary link information.

5. The communication system according to claim 1, wherein
the computation apparatus (50) is configured to generate the search packet,
the boundary search unit (120) of the network information combination apparatus (10) is configured for receiving the search packet from the computation apparatus (50), and for transmitting the received search packet to the first control apparatus (21),
the network information combination apparatus (10) includes a search packet transfer unit configured to receive the search packet from the second control apparatus (22) and transfer the received search packet to the computation apparatus (50),
the computation apparatus (50) is configured to generate the boundary link information based on the received search packet,
the boundary search unit (120) of the network information combination apparatus (10) is configured to obtain the boundary link information from the computation apparatus (50), and
the network information combination apparatus (10) includes an inter-domain information storage unit (121) configured to store the obtained boundary link information.

6. A communication method in a network information combination apparatus (10):
wherein the network information combination apparatus (10) is connected to a plurality of control apparatuses (21, 22) each for controlling packet transmission by one or more communication nodes (31 to 36) connected to the control apparatuses (21, 22), by setting packet processing rules in the communication nodes (31 to 36); and the network information combination apparatus (10) is connected to a computation apparatus (50) wherein the computation apparatus (50) computes packet processing rules across a plurality of domains, wherein
each domain is indicated by a range of node IDs, the domains including a first domain in which one or more communication nodes are controlled by a first control apparatus (21), and a second domain in which one or more communication nodes are controlled by a second control apparatus (22);
the method comprising:
acquiring network information of a connection relationship between the communication nodes controlled by each of the control apparatuses (21, 22) from each of the control apparatuses (21, 22), combining a plurality of items of network information acquired from each of the control apparatuses (21, 22) based on boundary link information wherein the boundary link information is based on a connection relationship at a boundary between the first and second domains, notifying the combined network information to the computation apparatus (50),
transmitting a search packet to the first control apparatus (21) to search a boundary between the domains wherein the search packet includes identification information of a first communication node and identification information of a first port in the first communication node for transmitting the search packet wherein the first communication node is in the first domain controlled by the first control apparatus (21) and is connected to a second communication node in the second domain controlled by the second control apparatus (22);
wherein the search packet is transmitted from the first communication node in the first domain to the second communication node in the second domain and is then transmitted from the second communication node to the second control apparatus (22);
receiving the search packet or boundary link information from the second control apparatus wherein the search packet further includes the identification information of the second node in the second domain and the identification information of a second port in the second communication node receiving the search packet;
obtaining boundary link information wherein the boundary link information comprises an association of the identification information of the first communication node in the first domain, the identification information of the first port in the first communication node for transmitting the search packet, the identification information of the second node in the second domain and the identification information of the second port in the second communication node receiving the search packet.

7. A network information combination program comprising instructions which, when the program is executed by a computer, cause the computer to carry out the method of claim 6.

## Patentansprüche

1. Kommunikationssystem, das aufweist:
mehrere Steuervorrichtungen (21, 22), die jeweils konfiguriert sind, die Paketübertragung durch einen oder mehrere Kommunikationsknoten (31 bis 36), die mit der Steuervorrichtung (21, 22) verbunden sind, durch Festlegen von Paketverarbeitungsregeln in den Kommunikationsknoten (31 bis 36) zu steuern; und
eine Netzwerkinformationskombinationsvorrichtung (10), die mit den mehreren Steuervorrichtungen (21, 22) verbunden ist und mit einer Berechnungsvorrichtung (50) verbunden ist, wobei die Berechnungsvorrichtung konfiguriert ist, die Paketverarbeitungsregeln, die in den Kommunikationsknoten (31 bis 36) über mehrere Domänen festgelegt werden sollen, zu berechnen,
wobei jede Domäne durch einen Bereich von Knoten-IDs angegeben wird, wobei die Domänen eine erste Domäne, in der ein oder mehrere Kommunikationsknoten (31 bis 36) durch eine erste Steuervorrichtung (21) gesteuert werden, und eine zweite Domäne, in der ein oder mehrere Kommunikationsknoten (31 bis 36) durch eine zweite Steuervorrichtung (22) gesteuert werden, aufweisen, wobei
die Netzwerkinformationskombinationsvorrichtung (10) aufweist:
eine Netzwerkinformationskombinationseinheit (110), die konfiguriert ist, Netzwerkinformationen einer Verbindungsbeziehung zwischen den Kommunikationsknoten (31 bis 36), die von jeder der Steuervorrichtungen (21, 22) gesteuert werden, zu erlangen und der Vielzahl von Netzwerkinformationselementen, die von jeder Steuervorrichtung (21, 22) erlangt werden, basierend auf Grenzverbindungsinformationen zu kombinieren, wobei die Grenzverbindungsinformationen auf einer Verbindungsbeziehung an einer Grenze zwischen den ersten und zweiten Domänen basieren;
eine Netzwerkinformationsbenachrichtigungseinheit, die konfiguriert ist, der Berechnungsvorrichtung die kombinierten Netzwerkinformationen mitzuteilen; und
eine Grenzsucheinheit (120), die konfiguriert ist:
ein Suchpaket an die erste Steuervorrichtung (21) zu übertragen, um eine Grenze zwischen den Domänen zu suchen, wobei das Suchpaket Identifikationsinformationen eines ersten Kommunikationsknotens und Identifikationsinformationen eines ersten Anschlusses in dem ersten Kommunikationsknoten zum Übertragen des Suchpakets umfasst, wobei der erste Kommunikationsknoten in der ersten Domäne ist, die von der ersten Steuervorrichtung (21) gesteuert wird, und mit einem zweiten Kommunikationsknoten in der zweiten Domäne, die von der zweiten Steuervorrichtung (22) gesteuert wird, verbunden ist;
das Suchpaket oder Grenzverbindungsinformationen von der zweiten Steuervorrichtung (22) zu empfangen,
und Grenzverbindungsinformationen zu erhalten, wobei die Grenzverbindungsinformationen eine Verbindung der Identifikationsinformationen des ersten Kommunikationsknotens in der ersten Domäne, der Identifikationsinformationen des ersten Anschlusses des ersten Kommunikationsknotens zum Übertragen des Suchpakets, der Identifikationsinformationen des zweiten Kommunikationsknotens in der zweiten Domäne und der Identifikationsinformationen eines zweiten Anschlusses des zweiten Kommunikationsknotens, der das Suchpaket empfängt, aufweisen;
wobei die erste Steuervorrichtung (21) eine erste Suchpaketübertragungseinheit (232) aufweist, die konfiguriert ist, das Suchpaket, das von der Grenzsucheinheit (120) empfangen wird, zu steuern, so dass es an den ersten Kommunikationsknoten übertragen wird und dann von dem ersten Anschluss des ersten Kommunikationsknotens an den zweiten Kommunikationsknoten in der zweiten Domäne übertragen wird, wobei der zweite Kommunikationsknoten konfiguriert ist, das Suchpaket an die zweite Steuervorrichtung (22) zu übertragen;
wobei die zweite Steuervorrichtung (22) eine zweite Suchpaketübertragungseinheit (232) aufweist, die konfiguriert ist, das Suchpaket oder Grenzverbindungsinformationen an die Grenzsucheinheit (120) zu übertragen, wobei das Suchpaket ferner die Identifikationsinformationen des zweiten Kommunikationsknotens in der zweiten Domäne und die Identifikationsinformationen des zweiten Anschlusses in dem zweiten Kommunikationsknoten, der das Suchpaket empfängt, umfasst.

2. Kommunikationssystem nach Anspruch 1,
wobei die Netzwerkinformationskombinationsvorrichtung (10) konfiguriert ist, die Grenzverbindungsinformationen, die durch die Grenzsucheinheit (120) basierend auf dem Suchpaket, das von der zweiten Steuervorrichtung (22) empfangen wird, erhalten werden, zu erzeugen,
und die Netzwerkinformationskombinationsvorrichtung (10) eine Interdomänen-Informationsspeichereinheit (121) umfasst, die konfiguriert ist, die erzeugten Grenzverbindungsinformationen zu speichern.

3. Kommunikationssystem nach Anspruch 1, wobei
die Grenzverbindungsinformationen durch die zweite Suchpaketübertragungseinheit (232) der zweiten Steuervorrichtung (22) basierend auf dem Suchpaket, das von dem zweiten Kommunikationsknoten empfangen wird, erzeugt wird, und wobei die Grenzverbindungsinformationen an die Netzwerkinformationskombinationsvorrichtung (10) übertragen werden,
die Grenzsucheinheit (120) der Netzwerkinformationskombinationsvorrichtung (10) konfiguriert ist, die Grenzverbindungsinformationen von der zweiten Steuereinheit (22) zu erhalten, und
die Netzwerkinformationskombinationsvorrichtung (10) eine Interdomänen-Informationsspeichereinheit (121) umfasst, die konfiguriert ist, die erhaltenen Grenzverbindungsinformationen zu speichern.

4. Kommunikationssystem nach Anspruch 1,
wobei die Netzwerkinformationskombinationsvorrichtung (10) aufweist:
eine Suchpaketübertragungseinheit, die konfiguriert ist, das Suchpaket von der zweiten Steuervorrichtung zu empfangen und das empfangene Suchpaket an die Berechnungsvorrichtung (50) zu übertragen; und wobei
die Berechnungsvorrichtung (50) konfiguriert ist, die Grenzverbindungsinformationen basierend auf dem Suchpaket zu erzeugen,
die Grenzsucheinheit (120) der Netzwerkinformationskombinationsvorrichtung (10) konfiguriert ist, die Grenzverbindungsinformationen von der Berechnungsvorrichtung (50) zu erhalten, und
die Netzwerkinformationskombinationsvorrichtung (10) eine Interdomänen-Speichereinheit (121) umfasst, die konfiguriert ist, die erhaltenen Grenzverbindungsinformationen zu speichern.

5. Kommunikationssystem nach Anspruch 1, wobei
die Berechnungsvorrichtung (50) konfiguriert ist, das Suchpaket zu erzeugen,
die Grenzsucheinheit (120) der Netzwerkinformationskombinationsvorrichtung (10) konfiguriert ist, das Suchpaket von der Berechnungseinheit (50) zu empfangen und um das empfangene Suchpaket an die erste Steuervorrichtung (21) zu übertragen,
die Netzwerkinformationskombinationsvorrichtung (10) eine Suchpaketübertragungseinheit umfasst, die konfiguriert ist, das Suchpaket von der zweiten Steuervorrichtung (22) zu empfangen und das empfangene Suchpaket an die Berechnungsvorrichtung (50) zu übertragen,
die Berechnungsvorrichtung (50) konfiguriert ist, die Grenzverbindungsinformationen basierend auf dem empfangenen Suchpaket zu erzeugen,
die Grenzsucheinheit (120) der Netzwerkinformationskombinationsvorrichtung (10) konfiguriert ist, die Grenzverbindungsinformationen von der Berechnungsvorrichtung (50) zu erhalten, und
die Netzwerkinformationskombinationsvorrichtung (10) eine Interdomänen-Informationsspeichereinheit (121) umfasst, die konfiguriert ist, die erhaltenen Grenzverbindungsinformationen zu speichern.

6. Kommunikationsverfahren in einer Netzwerkinformationskombinationsvorrichtung (10), wobei die Netzwerkinformationskombinationsvorrichtung (10) mit mehreren Steuervorrichtungen (21, 22) verbunden ist, die jeweils dazu dienen, die Paketübertragung durch einen oder mehrere Kommunikationsknoten (31 bis 36), die mit den Steuervorrichtungen (21, 22) verbunden sind, durch Festlegen von Paketverarbeitungsregeln in den Kommunikationsknoten (31 bis 36) zu steuern; und
wobei die Netzwerkinformationskombinationsvorrichtung (10) mit einer Berechnungsvorrichtung (50) verbunden ist, wobei die Berechnungsvorrichtung (50) Paketverarbeitungsregeln über mehrere Domänen berechnet, wobei jede Domäne durch einen Bereich von Knoten-IDs angegeben wird, wobei die Domänen eine erste Domäne, in der ein oder mehrere Kommunikationsknoten durch eine erste Steuervorrichtung (21) gesteuert werden, und eine zweite Domäne, in der ein oder mehrere Kommunikationsknoten durch eine zweite Steuervorrichtung (22) gesteuert werden, aufweisen;
wobei das Verfahren aufweist:
Erfassen von Netzwerkinformationen über eine Verbindungsbeziehung zwischen den Kommunikationsknoten, die von jeder der Steuervorrichtungen (21, 22) gesteuert werden,
Kombinieren der Vielzahl von Netzwerkinformationselementen, die von jeder der Steuervorrichtungen (21, 22) erfasst werden, basierend auf Grenzverbindungsinformationen, wobei die Grenzverbindungsinformationen auf einer Verbindungsbeziehung an einer Grenze zwischen den ersten und zweiten Domänen basieren;
Mitteilen der kombinierten Netzwerkinformationen an die Berechnungseinheit (50),
Übertragen eines Suchpakets an die erste Steuervorrichtung (21), um eine Grenze zwischen den Domänen zu suchen, wobei das Suchpaket Identifikationsinformationen eines ersten Kommunikationsknotens und Identifikationsinformationen eines ersten Anschlusses in dem ersten Kommunikationsknoten zum Übertragen des Suchpakets umfasst, wobei der erste Kommunikationsknoten in der ersten Domäne ist, die von der ersten Steuervorrichtung (21) gesteuert wird, und mit einem zweiten Kommunikationsknoten in der zweiten Domäne, die von der zweiten Steuervorrichtung (22) gesteuert wird, verbunden ist;
wobei das Suchpaket von dem ersten Kommunikationsknoten in der ersten Domäne an den zweiten Kommunikationsknoten in der zweiten Domäne übertragen wird und dann von dem zweiten Kommunikationsknoten an die zweite Steuervorrichtung (22) übertragen wird;
Empfangen des Suchpakets oder der Grenzverbindungsinformationen von der zweiten Steuervorrichtung, wobei das Suchpaket ferner die Identifikationsinformationen des zweiten Knotens in der zweiten Domäne und die Identifikationsinformationen eines zweiten Anschlusses in dem zweiten Kommunikationsknoten, der das Suchpaket empfängt, umfasst;
Erhalten von Grenzverbindungsinformationen, wobei die Grenzverbindungsinformationen eine Verbindung der Identifikationsinformationen des ersten Kommunikationsknotens in der ersten Domäne, der Identifikationsinformationen des ersten Anschlusses in dem ersten Kommunikationsknoten, der das Suchpaket überträgt, der Identifikationsinformationen des zweiten Knotens in der zweiten Domäne und der Identifikationsinformationen des zweiten Anschlusses in dem zweiten Kommunikationsknoten, der das Suchpaket empfängt, umfasst.

7. Netzwerkinformationskombinationsprogramm, das Anweisungen aufweist, die, wenn das Programm von einem Computer ausgeführt wird, bewirken, dass der Computer das Verfahren nach Anspruch 6 ausführt.

## Revendications

1. Système de communication comprenant :
une pluralité d'appareils de commande (21, 22) configurés chacun pour commander une transmission de paquet par un ou plusieurs noeuds de communication (31 à 36) connectés à l'appareil de commande (21, 22), en fixant des règles de traitement de paquet dans les noeuds de communication (31 à 36) ; et
un appareil de combinaison d'informations de réseau (10) connecté à la pluralité d'appareils de commande (21, 22) et connecté à un appareil de calcul (50) dans lequel l'appareil de calcul est configuré pour calculer les règles de traitement de paquet à fixer dans les noeuds de communication (31 à 36) à travers une pluralité de domaines, dans lequel chaque domaine est indiqué par une plage d'identifiants de noeud, les domaines comportant un premier domaine dans lequel un ou plusieurs noeuds de communication (31 à 36) sont commandés par un premier appareil de commande (21), et un second domaine dans lequel un ou plusieurs noeuds de communication (31 à 36) sont commandés par un second appareil de commande (22), dans lequel l'appareil de combinaison d'informations de réseau (10) comporte :
une unité de combinaison d'informations de réseau (110) configurée pour acquérir des informations de réseau d'une relation de connexion entre les noeuds de communication (31 à 36) commandés par chacun des appareils de commande (21, 22) et combinant une pluralité d'éléments d'informations de réseau acquis en provenance de chaque appareil de commande (21, 22) d'après des informations de liaison de limite, dans lequel les informations de liaison de limite sont basées sur une relation de connexion au niveau d'une limite entre les premier et second domaines ;
une unité de notification d'informations de réseau configurée pour notifier les informations de réseau combinées à l'appareil de calcul ; et
une unité de recherche de limite (120) configurée pour :
transmettre un paquet de recherche au premier appareil de commande (21) pour rechercher une limite entre les domaines, dans lequel le paquet de recherche comporte des informations d'identification d'un premier noeud de communication et des informations d'identification d'un premier port dans le premier noeud de communication pour transmettre le paquet de recherche, dans lequel le premier noeud de communication est dans le premier domaine commandé par le premier appareil de commande (21) et est connecté à un second noeud de communication dans le second domaine commandé par le second appareil de commande (22) ;
recevoir le paquet de recherche ou des informations de liaison de limite en provenance du second appareil de commande (22) ;
et obtenir des informations de liaison de limite dans lequel les informations de liaison de limite comprennent une association des informations d'identification du premier noeud de communication dans le premier domaine, des informations d'identification du premier port du premier noeud de communication pour transmettre le paquet de recherche, des informations d'identification du second noeud de communication dans le second domaine, et des informations d'identification d'un second port du second noeud de communication recevant le paquet de recherche ;
le premier appareil de commande (21) comporte une première unité de transmission de paquet de recherche (232) configurée pour commander le paquet de recherche reçu en provenance de l'unité de recherche de limite (120) à transmettre au premier noeud de communication puis à transmettre du premier port du premier noeud de communication au second noeud de communication dans le second domaine,
le second noeud de communication est configuré pour transmettre le paquet de recherche au second appareil de commande (22) ;
le second appareil de commande (22) comporte une seconde unité de transmission de paquet de recherche (232) configurée pour transmettre ledit paquet de recherche ou lesdites informations de liaison de limite à l'unité de recherche de limite (120), dans lequel le paquet de recherche comporte en outre les informations d'identification du second noeud de communication dans le second domaine et les informations d'identification du second port dans le second noeud de communication recevant le paquet de recherche.

2. Système de communication selon la revendication 1, dans lequel l'appareil de combinaison d'informations de réseau (10) est configuré pour générer les informations de liaison de limite obtenues par l'unité de recherche de limite (120) d'après le paquet de recherche reçu en provenance du second appareil de commande (22), et l'appareil de combinaison d'informations de réseau (10) comporte une unité de stockage d'informations interdomaine (121) configurée pour stocker les informations de liaison de limite générées.

3. Système de communication selon la revendication 1, dans lequel
les informations de liaison de limite sont générées par la seconde unité de transmission de paquet de recherche (232) du second appareil de commande (22) d'après le paquet de recherche reçu en provenance du second noeud de communication, et dans lequel les informations de liaison de limite sont transmises à l'appareil de combinaison d'informations de réseau (10),
l'unité de recherche de limite (120) de l'appareil de combinaison d'informations de réseau (10) est configurée pour obtenir les informations de liaison de limite en provenance du second appareil de commande (22), et
l'appareil de combinaison d'informations de réseau (10) comporte une unité de stockage d'informations interdomaine (121) configurée pour stocker les informations de liaison de limite obtenues.

4. Système de communication selon la revendication 1, dans lequel l'appareil de combinaison d'informations de réseau (10) comporte :
une unité de transfert de paquet de recherche configurée pour recevoir le paquet de recherche en provenance du second appareil de commande et transférer le paquet de recherche reçu à l'appareil de calcul (50) ; et dans lequel
l'appareil de calcul (50) est configuré pour générer les informations de liaison de limite d'après le paquet de recherche,
l'unité de recherche de limite (120) de l'appareil de combinaison d'informations de réseau (10) est configurée pour obtenir les informations de liaison de limite auprès de l'appareil de calcul (50), et
l'appareil de combinaison d'informations de réseau (10) comporte une unité de stockage d'informations interdomaine (121) configurée pour stocker les informations de liaison de limite obtenues.

5. Système de communication selon la revendication 1, dans lequel
l'appareil de calcul (50) est configuré pour générer le paquet de recherche,
l'unité de recherche de limite (120) de l'appareil de combinaison d'informations de réseau (10) est configurée pour recevoir le paquet de recherche en provenance de l'appareil de calcul (50), et pour transmettre le paquet de recherche reçu au premier appareil de commande (21),
l'appareil de combinaison d'informations de réseau (10) comporte une unité de transfert de paquet de recherche configurée pour recevoir le paquet de recherche en provenance du second appareil de commande (22) et transférer le paquet de recherche reçu à l'appareil de calcul (50),
l'appareil de calcul (50) est configuré pour générer les informations de liaison de limite d'après le paquet de recherche reçu,
l'unité de recherche de limite (120) de l'appareil de combinaison d'informations de réseau (10) est configurée pour obtenir les informations de liaison de limite auprès de l'appareil de calcul (50), et
l'appareil de combinaison d'informations de réseau (10) comporte une unité de stockage d'informations interdomaine (121) configurée pour stocker les informations de liaison de limite obtenues.

6. Procédé de communication dans un appareil de combinaison d'informations de réseau (10), dans lequel l'appareil de combinaison d'informations de réseau (10) est connecté à une pluralité d'appareils de commande (21, 22) chacun servant à commander une transmission de paquet par un ou plusieurs noeuds de communication (31 à 36) connectés aux appareils de commande (21, 22), en fixant des règles de traitement de paquet dans les noeuds de communication (31 à 36) ; et l'appareil de combinaison d'informations de réseau (10) est connecté à un appareil de calcul (50), dans lequel l'appareil de calcul (50) calcule des règles de traitement de paquet à travers une pluralité de domaines, dans lequel chaque domaine est indiqué par une plage d'identifiants de noeud, les domaines comportant un premier domaine dans lequel un ou plusieurs noeuds de communication sont commandés par un premier appareil de commande (21), et un second domaine dans lequel un ou plusieurs noeuds de communication sont commandés par un second appareil de commande (22) ;
le procédé comprenant :
l'acquisition d'informations de réseau d'une relation de connexion entre les noeuds de communication commandés par chacun des appareils de commande (21, 22) auprès de chacun des appareils de commande (21, 22),
la combinaison d'une pluralité d'éléments d'informations de réseau acquis auprès de chacun des appareils de commande (21, 22) d'après des informations de liaison de limite, dans lequel les informations de liaison de limite sont basées sur une relation de connexion au niveau d'une limite entre les premier et second domaines,
la notification des informations de réseau combinées à l'appareil de calcul (50),
la transmission d'un paquet de recherche au premier appareil de commande (21) pour rechercher une limite entre les domaines, dans lequel le paquet de recherche comporte des informations d'identification d'un premier noeud de communication et des informations d'identification d'un premier port dans le premier noeud de communication pour transmettre le paquet de recherche, dans lequel le premier noeud de communication est dans le premier domaine commandé par le premier appareil de commande (21) et est connecté à un second noeud de communication dans le second domaine commandé par le second appareil de commande (22) ;
dans lequel le paquet de recherche est transmis du premier noeud de communication dans le premier domaine au second noeud de communication dans le second domaine puis est transmis du second noeud de communication au second appareil de commande (22) ;
la réception du paquet de recherche ou d'informations de liaison de limite en provenance du second appareil de commande,
dans lequel le paquet de recherche comporte en outre les informations d'identification du second noeud dans le second domaine et les informations d'identification d'un second port dans le second noeud de communication recevant le paquet de recherche ;
l'obtention d'informations de liaison de limite, dans lequel les informations de liaison de limite comprennent une association des informations d'identification du premier noeud de communication dans le premier domaine, des informations d'identification du premier port dans le premier noeud de communication pour transmettre le paquet de recherche, des informations d'identification du second noeud dans le second domaine et des informations d'identification du second port dans le second noeud de communication recevant le paquet de recherche.

7. Programme de combinaison d'informations de réseau comprenant des instructions qui, lorsque le programme est exécuté par un ordinateur, amènent l'ordinateur à réaliser le procédé selon la revendication 6.
